# EUROPÄISCHE PATENTANMELDUNG

(11) **EP 3 002 380 A1**
(43) Veröffentlichungstag der Anmeldung: **06.04.2016**
(21) Anmeldenummer: 14187032.9
(22) Anmeldetag: 30.09.2014
(51) Int. Cl.: E04C 3/28, B29C 47/00, B29C 47/12, E04C 5/20

(54) **Abstandhalter und Verfahren zur Herstellung**

(71) Anmelder: Reuss-Seifert GmbH, 45549 Sprockhövel (DE)
(72) Erfinder: Steffen, Heiko, 59439 Holzwickede (DE)
(74) Vertreter: Brötz, Helmut

(57) **Zusammenfassung**

Die Erfindung betrifft einen Abstandhalter (1), insbesondere zur Abstützung von Bewehrungsstäben und/oder Bewehrungsmatten, umfassend einen sich in einer, Längsrichtung (L) erstreckenden Längssteg (2), der zwei in einer Querrichtung (Q) voneinander beabstandete Längsränder (3, 3') aufweist, wobei der Abstandhalter (1) einen ersten Längsschenkel (4) umfasst, der an den Längssteg (2) einstückig an dessen erstem Längsrand (3) angeschlossen ist und der sich in zu der Längsrichtung (L) senkrechten Querschnitten quer, zu dem Längssteg (2) erstreckt, wobei der erste Längsschenkel (4) eine Wandung (5) und insbesondere Durchgangsöffnungen (6) aufweist, und wobei der Abstandhalter (1) einen zweiten Längsschenkel (4') umfasst, der an den Längssteg (2) einstückig an dessen zweitem Längsrand (3') angeschlossen ist und der sich in zu der Längsrichtung (L) senkrechten Querschnitten quer, zu dem Längssteg (2) erstreckt, wobei der zweite Längsschenkel (4') eine Wandung (5') und insbesondere Durchgangsöffnungen (6') aufweist, wobei die Wandung (5) des ersten Längsschenkels (4) und die Wandung (5') des zweiten Längsschenkels (4') mittels ihres jeweiligen von dem Längssteg (2) abgewandten Längsrandes (7, 7') oder Abschnitten davon gemeinsam eine zu der Längsrichtung (L) und der Querrichtung (Q) parallele Aufstellebene (A) des Abstandhalters (1) aufspannen, zu der sich eine Höhenrichtung (H) des Abstandhalters (1) senkrecht erstreckt. Zur vorteilhaften Weiterbildung wird vorgeschlagen, dass der Verlauf (11) der Wandung (5) des ersten Längsschenkels (4) entweder in zumindest einem auf die Höhenrichtung (H) bezogenen, insbesondere an die Aufstellebene (A) angrenzenden, Höhenteilintervall der Wandung (5) oder in der gesamten Höhe der Wandung (5) in zu der Längsrichtung (L) und der Querrichtung (Q) parallelen Querschnitten wellenartig ist und dass der Verlauf (11') der Wandung (5') des zweiten Längsschenkels (4') entweder in zumindest einem auf die Höhenrichtung (H) bezogenen, Höhenteilintervall der Wandung (5') oder in der gesamten Höhe der Wandung (5') in zu der Längsrichtung (L) und der Querrichtung (Q) parallelen Querschnitten wellenartig ist. Die Erfindung betrifft auch ein Verfahren zur Herstellung von Kunststoffhohlprofilen, insbesondere von Abstandhaltern gemäß den vorangehend genannten Merkmalen.

## Beschreibung

Die vorliegende Erfindung betrifft zunächst einen Abstandhalter, vorzugsweise zur Abstützung von Bewehrungsstäben und/oder Bewehrungsmatten, umfassend einen sich in einer, vorzugsweise gerade verlaufenden, Längsrichtung erstreckenden Längssteg, der zwei in einer Querrichtung, welche senkrecht zu der Längsrichtung verläuft, voneinander beabstandete Längsränder aufweist, wobei der Abstandhalter einen ersten Längsschenkel umfasst, der an den Längssteg einstückig an dessen erstem Längsrand angeschlossen ist und der sich in zu der Längsrichtung senkrechten Querschnitten (also in zu der Längsrichtung senkrechten, voneinander beabstandeten Schnittebenen bzw. Betrachtungsebenen) quer, insbesondere senkrecht, zu dem Längssteg erstreckt, wobei der erste Längsschenkel eine Wandung und insbesondere Durchgangsöffnungen aufweist, und wobei der Abstandhalter einen zweiten Längsschenkel umfasst, der an den Längssteg einstückig an dessen zweitem Längsrand angeschlossen ist und der sich in zu der Längsrichtung senkrechten Querschnitten quer, insbesondere senkrecht, zu dem Längssteg erstreckt, wobei der zweite Längsschenkel eine Wandung und insbesondere Durchgangsöffnungen aufweist, wobei die Wandung des ersten Längsschenkels und die Wandung des zweiten Längsschenkels mittels ihres jeweiligen von dem Längssteg abgewandten Längsrandes gemeinsam eine zu der Längsrichtung und der Querrichtung parallele Aufstellebene des Abstandhalters aufspannen, zu der sich eine Höhenrichtung des Abstandhalters senkrecht erstreckt.

Im Baugewerbe werden derartige Abstandhalter bzw. Fixierungen vornehmlich bei der Erstellung von Betondecken und -trägern zur Absicherung eines gewünschten Abstandes zwischen der Schalung einerseits und Bewehrungseisen und/oder Bewehrungsmatten andererseits eingesetzt. Diese meist im Querschnitt C- oder U-förmigen Profile werden mit ihrer offenen Seite in Richtung Schalung bzw. um 180° um die Längsachse gedreht bei Dämmstoffeinlagen verlegt. Mögliche Aussparungen in den einzelnen Profilseiten sollen den Durchfluss von Beton und eine geringe Standfläche sowie Materialersparnis erbringen. Diese konstruktive Ausgestaltung der derzeit am Markt verwendeten Profile ist einerseits sehr materialintensiv. Andererseits können die dabei herkömmlich geradlinig verlaufenden Längsstege und Längsschenkel der Abstandhalter eine kritische Gefügeunterbrechung im Beton begünstigen.

Vor diesem Hintergrund liegt der Erfindung die Aufgabe zugrunde, Abstandhalter der eingangs genannten Art vorteilhaft weiterzubilden. Insbesondere wird angestrebt, dabei den Materialaufwand bei zugleich möglichst hoher Steifigkeit zu verringern. Insbesondere wird auch angestrebt, mittels der Ausgestaltung einer kritischen Gefügeunterbrechung im Beton möglichst entgegenzuwirken.

Diese Aufgabe wird von der Erfindung zunächst und im Wesentlichen in Verbindung mit den Merkmalen gelöst, dass der Verlauf der Wandung des ersten Längsschenkels entweder in zumindest einem auf die Höhenrichtung bezogenen, vorzugsweise an die Aufstellebene angrenzenden, Höhenteilintervall der Wandung oder in der gesamten Höhe der Wandung in zu der Längsrichtung und der Querrichtung parallelen Querschnitten wellenartig ist und dass der Verlauf der Wandung des zweiten Längsschenkels entweder in zumindest einem auf die Höhenrichtung bezogenen, vorzugsweise an die Aufstellebene angrenzenden, Höhenintervall der Wandung oder in der gesamten Höhe der Wandung in zu der Längsrichtung und der Querrichtung parallelen Querschnitten wellenartig ist.

Die hier angesprochenen Querschnitte beziehen sich auf gedachte Schnittebenen (bzw. Betrachtungsebenen), die sich in zueinander unterschiedlicher Höhe, also in zueinander unterschiedlichem Abstand von der Aufstellebene, parallel zu der Längsrichtung und zu der Querrichtung erstrecken. Der wellenartige Verlauf (stattdessen könnte man auch von einer wellenartigen Profilierung sprechen) der Längsschenkel ermöglicht bei verringertem Materialaufwand eine nach wie vor gute Steifigkeit. Zugleich wird beim Betonieren einer kritischen geradlinigen Gefügeunterbrechung im Beton entgegengewirkt. Wenn die Längsschenkel auch an die Aufstellebene angrenzend wellenartig verlaufen, kann zugleich die Standsicherheit des Abstandhalters auf der Aufstellebene verbessert werden.

Es bestehen zahlreiche Möglichkeiten zur bevorzugten Weiterbildung. Bevorzugt ist, dass sich der Abstandhalter in seiner Längsrichtung zwischen zwei Längsenden erstreckt, wobei die Abmessung in Längsrichtung vorzugsweise größer, weiter vorzugsweise um eine oder mehrere Zehnerpotenzen größer, als die Abmessung des Abstandhalters in quer zu seiner Längsrichtung liegenden Querschnitten ist. Insofern ist eine "linienförmige" Ausgestaltung bevorzugt. Im Hinblick darauf, dass der Abstandhalter einen Längssteg und zwei daran einstückig angeschlossene Längsschenkel aufweist, kann stattdessen auch allgemein von einem Profil gesprochen werden. Vorzugsweise handelt es sich um ein "linienförmiges" Kunststoffprofil. Dieses kann im Baugewerbe als Fixierung bzw. Abstandhalter zwischen Bewehrung und Schalung verwendet werden. Hinsichtlich des Längssteges ist bevorzugt, dass dieser von einer in sich ebenen Wandung gebildet ist, die vorzugsweise, abgesehen von etwaigen Durchgangsöffnungen, eine einheitliche Wandstärke besitzt. Alternativ wäre möglich, dass die Wandung des Längssteges in zu der Längsrichtung und der Höhenrichtung parallelen Querschnitten (also Schnittebenen bzw. Betrachtungsebenen) einen wellenartigen Verlauf besitzt. Bevorzugt ist, dass die an den Längsrändern verlaufenden seitlichen Stirnflächen des Längssteges 2 jeweils eine wellenartige Kontur bzw. einen wellenartigen Verlauf besitzen, welcher dem wellenartigen Verlauf der daran angrenzenden Wandung entspricht. Die entsprechenden seitlichen Stirnflächen können somit nahtlos in der äußeren Oberflächen der Wandungen der Längsschenkel übergehen.

Wenn sich die jeweilige Wandung der Längsschenkel in Längsrichtung durchgehend, also ohne Durchgangsöffnungen, erstreckt, ist bevorzugt, dass sich die jeweilige Wandung in der Gesamtlänge des Abstandhalters durchgehend wellenartig erstreckt. Wenn die Längsschenkel eine oder mehrere Durchgangsöffnungen aufweisen, ist bevorzugt, dass ihre jeweilige Wandung in Längsrichtung zwischen den Durchgangsöffnungen durchgehend wellenartig verläuft. Die Längsrichtung verläuft vorzugsweise gerade, könnte aber auch bspw. in einer Ebene gekrümmt verlaufen.

Bevorzugt ist, dass der Abstandhalter aus Kunststoff, bspw. aus Polyvinylchlorid (PVC) und/oder Polystyrol (PS) und/ oder Polyethylen (PE) wie bspw. High-Density-Polyethylen (HDPE) oder Low-Density-Polyethylen (LDPE), oder dergleichen, vorzugsweise mittels eines Extrusionsverfahrens, hergestellt ist. Ebenfalls ist bevorzugt, dass der Verlauf der Wandung des ersten Längsschenkels in zumindest einem an den Längssteg angrenzenden Höhenteilintervall der Wandung in jedem zu der Längsrichtung und der Querrichtung parallelen Querschnitt wellenartig ist und dass der Verlauf der Wandung des zweiten Längsschenkels in zumindest einem an den Längssteg angrenzenden Höhenteilintervall der Wandung in jedem zu der Längsrichtung und der Querrichtung parallelen Querschnitt wellenartig ist.

In einer bevorzugten Ausgestaltung ist vorgesehen, dass in den genannten zu der Längsrichtung und zu der Querrichtung parallelen Querschnitten der Verlauf der Wandung des ersten Längsschenkels in allen Wandungsbereichen zumindest in der Phase übereinstimmend, insbesondere deckungsgleich, ist zu einem ersten gedachten geometrischen Verlauf, der in der gesamten Länge des ersten Längsschenkels durchgehend periodisch verläuft, und dass in den genannten zu der Längsrichtung und zu der Querrichtung parallelen Querschnitten der Verlauf der Wandung des zweiten Längsschenkels in allen Wandungsbereichen zumindest in der Phase übereinstimmend, insbesondere deckungsgleich, ist zu einem zweiten gedachten geometrischen Verlauf, der in der gesamten Länge des zweiten Längsschenkels durchgehend periodisch verläuft.

Es besteht bspw. die Möglichkeit, dass der erste geometrische Verlauf und/ oder der zweite geometrische Verlauf wellenartig gerundet oder zick-zack-förmig oder trapezförmig oder rechteckförmig geformt ist. Ein wellenartig gerundeter Verlauf kann in Längsrichtung betrachtet abwechselnd konvexe und konkave Wandabschnitte aufweisen. Bei einem wellenartig gerundeten Verlauf kann es sich bspw. um einen sinus- oder cosinusförmigen Verlauf handeln. Bevorzugt ist ein in Längsrichtung durchgehend wellenartiger Verlauf, insbesondere ein durchgehend gerundeter wellenartiger Verlauf. An den Wandungen der Längsschenkel ist bevorzugt, dass es keine ebenen und dabei parallel zu der Längsrichtung verlaufenden Wandungsbereiche gibt.

Bevorzugt ist, dass in einer Projektionsbetrachtung auf einen der genannten, zu der Längsrichtung und der Querrichtung parallelen Querschnitte, in dem alle Wandungsbereiche des ersten Längsschenkels zu dem ersten gedachten geometrischen Verlauf und alle Wandungsbereiche des zweiten Längsschenkels zu dem zweiten gedachten geometrischen Verlauf deckungsgleich sind, der erste und der zweite gedachte geometrische Verlauf in ihrer gesamten Länge in Querrichtung voneinander beabstandet sind und/oder zueinander bezüglich einer zu der Längsrichtung parallelen geometrischen Mittelachse achsensymmetrisch, insbesondere zueinander um eine halbe Periodenlänge in Längsrichtung phasenverschoben, verlaufen. Die in Querrichtung voneinander beabstandete Lage der beiden wellenartigen Wandungen ermöglicht eine weiter verbesserte Standfestigkeit.

Bevorzugt ist, dass jeder Längsschenkel in Längsrichtung voneinander beabstandete und auf der von dem Längssteg abgewandten Seite offene Durchgangsöffnungen aufweist, zwischen denen die Wand des Längsschenkels Stützabschnitte bildet. Ebenfalls ist bevorzugt, dass zumindest im Bereich der Stützabschnitte des ersten Längsschenkels der Verlauf der Wandung in jedem zu der Längsrichtung und zu der Querrichtung parallelen Querschnitt jeweils durchgängig form- und/oder phasengerecht dem ersten gedachten geometrischen wellenartigen Verlauf entspricht und dass zumindest im Bereich der Stützabschnitte des zweiten Längsschenkels der Verlauf der Wandung in jedem zu der Längsrichtung und zu der Querrichtung parallelen Querschnitt jeweils durchgängig form- und/oder phasengerecht dem zweiten gedachten geometrischen wellenartigen Verlauf entspricht. In Querschnitten, in denen die Wandungen von Durchgangsöffnungen unterbrochen sind, bezieht sich der wellenartige Verlauf der betreffenden Wandung entsprechend auf die angrenzend an oder zwischen den Durchgangsöffnungen vorhandenen Wandabschnitte.

Es besteht die Möglichkeit, dass sich die Wandung des ersten Längsschenkels zumindest in einem an den Längssteg angrenzenden Höhenteilintervall in der gesamten Länge des Abstandhalters erstreckt und in dem Höhenteilintervall in jedem zu der Längsrichtung und der Querrichtung parallelen Querschnitt in ihrem Verlauf durchgängig form- und/oder phasengerecht (also in der Phasenlage übereinstimmend) dem ersten gedachten wellenartigen Verlauf entspricht und dass sich die Wandung des zweiten Längsschenkels zumindest in dem an den Längssteg angrenzenden Höhenteilintervall in der gesamten Länge des Abstandhalters erstreckt und in dem Höhenteilintervall in jedem zu der Längsrichtung und der Querrichtung parallelen Querschnitt in ihrem Verlauf durchgängig form- und/oder phasengerecht dem zweiten gedachten wellenartigen Verlauf entspricht. Bevorzugt ist auch, dass sich der erste Rand des Längssteges wellenartig durchgängig form- und/oder phasengerecht entlang des ersten gedachten geometrischen Verlaufs erstreckt und dass sich der zweite Rand des Längssteges wellenartig durchgängig form- und/oder phasengerecht entlang des zweiten gedachten geometrischen Verlaufs erstreckt. Insbesondere zur Erzielung einer guten Standfestigkeit ist bevorzugt, dass an jedem Stützabschnitt des ersten Längsschenkels der von dem Längssteg abgewandte, an die Aufstellebene angrenzend verlaufende Randabschnitt hinsichtlich seiner Form und Phasenlage mit dem ersten gedachten periodischen Verlauf übereinstimmt und dass an jedem Stützabschnitt des zweiten Längsschenkels der von dem Längssteg abgewandte, angrenzend an die Aufstellebene verlaufende Randabschnitt hinsichtlich seiner Form und Phasenlage mit dem zweiten gedachten periodischen Verlauf übereinstimmt. Vorzugsweise verläuft der erste gedachte geometrische Verlauf bezüglich mehrerer auf ihm liegender Punkte punktsymmetrisch und/oder bezüglich mehrerer auf ihm liegender Punkte achsensymmetrisch. Alternativ oder kombinativ ist dies für den zweiten gedachten geometrischen Verlauf ebenfalls möglich. Als zweckmäßig wird angesehen, dass an jedem Stützabschnitt zumindest der von dem Längssteg abgewandte, parallel zur der Aufstellebene verlaufende Randabschnitt zumindest in einem Längenabschnitt einen bezüglich zumindest eines Punktes punktsymmetrischen Verlauf oder einen bezüglich einer geometrischen Achse achsensymmetrischen Verlauf aufweist.

Hinsichtlich der Durchgangsöffnungen der Längsschenkel ist bevorzugt, dass diese in einer zur Querrichtung parallelen Projektionsbetrachtung jeweils einen halbkreisförmigen oder rechteckigen Querschnitt aufweisen und/ oder dass in der Längsrichtung des Abstandhalters die Länge der Durchgangsöffnungen der Periodenlänge der wellenartigen Verläufe der Wandungen der Längsschenkel entspricht. Bei einer zweckmäßigen Ausgestaltung ist vorgesehen, dass die Durchgangsöffnungen des ersten Längsschenkels relativ zu den Durchgangsöffnungen des zweiten Längsschenkels in Längsrichtung des Abstandhalters, vorzugsweise um eine Periodenlänge der wellenartigen Verläufe, versetzt zueinander, vorzugsweise einander dabei in Längsrichtung nicht seitlich überlappend, angeordnet sind. Es besteht die Möglichkeit, dass die Länge des von dem Längssteg abgewandten freien Randes der Stützabschnitte der Periodenlänge oder der halben Periodenlänge der wellenartigen Verläufe entspricht.

Bevorzugt ist daran gedacht, dass die Wandungen des ersten Längsschenkels und des zweiten Längsschenkels jeweils eine einheitliche und insbesondere eine zueinander einheitliche Wandstärke besitzen. Bevorzugt ist, dass der Längssteg eine in sich einheitliche Wandstärke besitzt. Alternativ oder kombinativ kann die Wandung jedes Längsschenkels eine in sich einheitliche Wandstärke besitzen. Es besteht die Möglichkeit, dass die einheitliche Wandstärke des Längssteges der einheitlichen Wandstärke der Längsschenkel entspricht. Bevorzugt ist, dass die Wandung des Längsstegs durchgehend eben verläuft und /oder dass in dem Längssteg Durchgangsöffnungen ausgebildet sind, die insbesondere die Kontur eines Rechteckes, insbesondere mit gerundeten Ecken, aufweisen.

Gemäß einem weiteren Aspekt betrifft die Erfindung ein Verfahren zur Herstellung von sich in einer Längsrichtung erstreckenden, in zu der Längsrichtung senkrechten Querschnitten mehreckigen Kunststoffhohlprofilen, vorzugsweise von Abstandhaltern, aus Kunststoff, umfassend zumindest die Verfahrensschritte: Bereitstellen von plastifiziertem Kunststoff, vorzugsweise mittels Erwärmen und insbesondere Schmelzen von zur Extrusion geeignetem Kunststoffrohmaterial, wie bspw. Kunststoffgranulat und/oder Kunststoffpulver oder dergleichen, Erzeugen eines im erhitzten Zustand verformbaren Kunststoffhohlprofils (auch als Extrusionsprofil zu bezeichnen) aus dem plastifizierten Kunststoff, das im Profilquerschnitt einen am Umfang mehreckigen, entweder geschlossenen oder offenen Rand, insbesondere einen geschlossenen, viereckig verlaufenden Rand, besitzt, mittels Pressen des plastifizierten Kunststoffes durch eine Extrusionsdüse. Unter plastifiziertem Kunststoff wird in der Weise aufbereitetes Kunststoff-Rohmaterial verstanden, dass es sich zur Gewinnung eines Extrusionsprofils durch eine Extrusionsdüse hindurchpressen lässt.

Derzeit werden linienhafte, im Querschnitt mehreckige Endlosprofile mittels Extrusionsverfahren hergestellt, bei denen ein in Längsrichtung gradliniger, in sich ebener Verlauf aller Profilwandungen resultiert. Der Abzug erfolgt im Allgemeinen durch Raupenabzüge zu gegebenenfalls weiteren benötigten Verfahrenseinheiten, wie bspw. Einrichtungen zum Sägen, Stanzen oder Wasserschneiden. Mittels der bekannten Verfahren lassen sich Abstandhalter herstellen, die allerdings aufgrund ihres einfachen Aufbaus mit in sich ebenen Profilwandungen die eingangs beschriebenen Nachteile bzw. Einschränkungen mit sich bringen.

Vor diesem Hintergrund liegt der Erfindung die Aufgabe zugrunde, ein Verfahren der zuvor genannten Art vorteilhaft weiterzubilden. Insbesondere wird angestrebt, dass mit dem Verfahren Kunststoffhohlprofile, insbesondere Abstandhalter, herstellbar sind, die bei verringertem Materialaufwand (und somit verringertem Gewicht) eine möglichst gute Stabilität besitzen. Insbesondere wird auch angestrebt, mittels des verbesserten Verfahrens die Herstellung von Abstandhaltern mit einer verbesserten Standfestigkeit zu ermöglichen. Insbesondere wird auch angestrebt, eine möglichst einfache Herstellung solcher Profile und insbesondere von Abstandhaltern zu ermöglichen. Schließlich wird insbesondere angestrebt, in einem Verfahrensdurchgang gleichzeitig mehrere Profile, insbesondere Abstandhalter, gleichzeitig herstellen zu können.

Die Aufgabe wird gemäß dem weiteren Aspekt der Erfindung zunächst und im Wesentlichen in Verbindung mit den Merkmalen gelöst, dass eine oder mehrere, vorzugsweise zwei einander im Profilquerschnitt gegenüberliegende, Wandungen des verformbaren Kunststoffhohlprofils verformt werden, so dass sie jeweils in ihrer zumindest teilweisen oder ganzen, auf den Profilquerschnitt bezogenen Erstreckung in ihren entlang der Längsrichtung verlaufenden Querschnitten einen wellenartigen Verlauf besitzen, wobei vorzugsweise vorgesehen ist, dass jede der verformten Wandungen in zu der Längsrichtung senkrechten Profilquerschnitten einen geraden Verlauf besitzt. Bspw. könnte es sich um dreieckige, viereckige (insbesondere quadratische oder rechteckige) oder eine größere Anzahl von Profilecken aufweisende Hohlprofile handeln. Die Hohlprofile können in zu der Längsrichtung senkrechten Profilquerschnitten am Rand bzw. Umfang vorzugsweise geschlossen, alternativ aber offen (bspw. in Gestalt eines U-profilartigen Profilquerschnitts) sein. Anstelle von wellenartigem Verlauf könnte man auch von wellenartiger Profilierung sprechen. Bei dem erfindungsgemäßen Verfahren besteht die Möglichkeit, herkömmliche, bisher zur Herstellung von glattwandigen, mehreckigen Extrusionsprofilen verwendeter Extrusionsdüsen zu verwenden.

Es bestehen zahlreiche Möglichkeiten, das erfindungsgemäße Verfahren vorteilhaft weiterzubilden. Bevorzugt ist, dass der jeweilige wellenartige Verlauf der Wandungen mittels Formbacken eines Korrugators erzeugt wird. Zur Verformung der Wandungen des Kunststoffhohlprofils können Arbeitsoberflächen der Formbacken, die bei der Verformung in Kontakt mit den Wandungen treten, einen durchgehend wellenartigen, insbesondere durchgehend gerundeten, Verlauf aufweisen. Beispielsweise kann dabei an jeder Arbeitsoberfläche der wellenartige Verlauf in einer Periodenlänge ausgebildet sein. Der wellenartige Verlauf der Arbeitsoberfläche bezieht sich auf zu der Bewegungsebene der Formbacken parallele Querschnitte. Es ist bevorzugt, dass der jeweilige wellenartige Verlauf durchgehend gerundet oder zick-zack-förmig oder trapezförmig oder rechteckförmig oder dergleichen verläuft. Es besteht die Möglichkeit, dass die Wandungen zur Verformung von den Formbacken des Korrugators mittels Unterdruck angesaugt werden und/ oder von dem hohlen Profilinneren her mittels Überdruck gegen die Formbacken gepresst werden und/ oder dass zur Fixierung des jeweiligen wellenartigen Verlaufs die Wandungen mittels der Formbacken gekühlt werden. Mittels der Formbacken kann zugleich eine Kalibrierung erfolgen.

Bei einer zweckmäßigen Ausübung des Verfahrens ist vorgesehen, dass es sich bei dem Kunststoffhohlprofil um ein solches handelt, das im Profilquerschnitt einen am Umfang geschlossenen Rand besitzt, und dass das Verfahren, insbesondere nach dem Fixieren des wellenartigen Verlaufs, den Schritt umfasst, dass das Kunststoffhohlprofil, insbesondere mittels zumindest eines Laserstrahls, in Längsrichtung in zwei Kunststoffteilprofile zerteilt wird, von denen zumindest ein Kunststoffteilprofil, insbesondere beide Kunststoffteilprofile, einen U-profilartigen Profilquerschnitt besitzt oder besitzen. Es besteht die Möglichkeit, dass in eine oder in mehrere Wandungen des Kunststoffhohlprofils oder zumindest eines der Kunststoffteilprofile mittels einer oder mehrerer Lasereinrichtungen (man könnte jeweils auch von Laserschneideinrichtungen sprechen) Durchgangsöffnungen eingebracht werden. Zur Erzielung von Längenabschnitten besteht die Möglichkeit, dass das Kunststoffhohlprofil oder dass das oder die Kunststoffteilprofile mittels einer oder mehrerer Lasereinrichtungen zur Erzeugung von Längenabschnitten quer zur Längsrichtung durchtrennt wird oder werden.

Gemäß einem weiteren Aspekt betrifft die Erfindung ein Verfahren zur Herstellung von sich in einer Längsrichtung erstreckenden, in zur Längsrichtung senkrechten Profilquerschnitten mehreckigen Kunststoffhohlprofilen, insbesondere von Abstandhaltern, aus Kunststoff, umfassend zumindest die Verfahrensschritte: Bereitstellen von plastifiziertem Kunststoff, insbesondere mittels Schmelzen von zur Extrusion geeignetem Kunststoffrohmaterial, wie bspw. Kunststoffgranulat und/ oder Kunststoffpulver oder dergleichen, Erzeugen eines verformbaren Kunststoffhohlprofils aus dem plastifizierten Kunststoff, das im Profilquerschnitt einen am Umfang mehreckigen und entweder geschlossenen oder offenen Rand, insbesondere einen viereckigen Profilquerschnitt, besitzt, mittels Pressen des plastifizierten Kunststoffes durch eine Extrusionsdüse.

Dem weiteren Aspekt der Erfindung liegt die Aufgabe zugrunde, ein derartiges Verfahren vorteilhaft weiterzubilden. Die Aufgabe wird gemäß dem weiteren Aspekt der Erfindung zunächst und im Wesentlichen in Verbindung mit den Merkmalen gelöst, dass das Kunststoffhohlprofil mittels einer oder mehrerer Lasereinrichtungen in Längsrichtung des Kunststoffhohlprofils in zumindest zwei Kunststoffteilprofile durchteilt wird, von denen zumindest ein Kunststoffteilprofil, insbesondere zwei Kunststoffteilprofile, als Profilquerschnitt einen Hohlquerschnitt mit am Umfang offenen Rand besitzen, und/oder dass mittels einer oder mehrerer Lasereinrichtungen Durchgangsöffnungen in eine oder mehrere Wandungen des Kunststoffhohlprofils und/ oder in Wandungen von einem oder mehreren Kunststoffteilprofilen, eingebracht werden.

Als Lasereinrichtung kann jeweils eine zum Schneiden von Kunststoff, bspw. von PVC, geeignete Lasereinheit (bzw. sog. Laserkopf) verwendet werden, die vorzugsweise in eine oder mehrere, vorzugsweise quer zur Laserstrahlrichtung orientierte, Richtung bzw. Richtungen verfahrbar ist.

Es besteht die Möglichkeit, dass die beiden zuvor genannten Kunststoffteilprofile, bezogen auf den Profilquerschnitt, quer zu ihrer Schnittebene zueinander gleiche oder unterschiedliche Erstreckungen aufweisen.

Die Erfindung betrifft schließlich auch einen Abstandhalter, umfassend ein nach dem erfindungsgemäßen Verfahren hergestelltes Kunststoffhohlprofil oder Kunststoffteilprofil, wobei es sich vorzugsweise um einen Abstandhalter handelt, der einzelne oder mehrere der in den Ansprüchen 1 bis 13 angegebenen Merkmale aufweist.

Die Erfindung wird nachfolgend mit Bezug auf die beigefügten Figuren, welche bevorzugte Ausführungsbeispiele der Erfindung zeigen, weiter beschrieben. Im Einzelnen zeigt:
- Fig. 1: perspektivisch einen Längenabschnitt eines erfindungsgemäßen Abstandhalters, gemäß einem ersten bevorzugten Ausführungsbeispiel;
- Fig. 2: eine Draufsicht hierauf in Blickrichtung II gemäß Fig. 1;
- Fig. 3: eine Schnittansicht entlang Schnittebene III - III gemäß Fig. 2, demgegenüber in Vergrößerung;
- Fig. 4: eine Schnittansicht entlang Schnittebene IV - IV gemäß Fig. 2, demgegenüber in Vergrößerung;
- Fig. 5: eine Schnittansicht entlang Schnittebene V - V gemäß Fig. 2, demgegenüber in Vergrößerung;
- Fig. 6: eine Seitenansicht in Blickrichtung VI. gemäß Fig. 2;
- Fig. 7: eine Seitenansicht im Blickrichtung VII gemäß Fig. 2;
- Fig. 8: eine Schnittansicht entlang Schnittebene VIII - VIII gemäß Fig. 6;
- Fig. 9: perspektivisch einen Längenabschnitt eines erfindungsgemäßen Abstandhalters gemäß einem zweiten bevorzugten Ausführungsbeispiel;
- Fig. 10: eine Draufsicht in Blickrichtung X gemäß Fig. 9;
- Fig. 11: perspektivisch einen Längenabschnitt eines erfindungsgemäßen Abstandhalters gemäß einem dritten bevorzugten Ausführungsbeispiel;
- Fig. 12: eine Draufsicht in Blickrichtung XII gemäß Fig. 11;
- Fig. 13: eine Schnittansicht entlang Schnittebene XIII - XIII gemäß Fig.12, demgegenüber vergrößert;
- Fig. 14: eine Schnittansicht entlang Schnittebene XIV - XIV gemäß Fig.12, demgegenüber vergrößert;
- Fig. 15: eine Schnittansicht entlang Schnittebene XV - XV gemäß Fig.12, demgegenüber vergrößert;
- Fig. 16: eine Seitenansicht in Blickrichtung XVI gemäß Fig. 12;
- Fig. 17: eine Seitenansicht in Blickrichtung XVII gemäß Fig. 12;
- Fig. 18: eine Schnittansicht entlang Schnittebene XVIII - XVIII gemäß Fig.16;
- Fig. 19: perspektivisch einen Längenabschnitt eines erfindungsgemäßen Abstandhalters gemäß einem vierten bevorzugten Ausführungsbeispiel;
- Fig. 20: eine Draufsicht in Blickrichtung XX gemäß Fig. 19;
- Fig. 21: schematisch vereinfacht den Ablauf eines erfindungsgemäßen Verfahrens zur Herstellung von Abstandhaltern aus Kunststoff gemäß einer bevorzugten Verfahrensweise, in einer Seitenansicht;
- Fig. 21a: eine Schnittansicht des extrudierten Kunststoffprofils entlang Schnittebene XXIa - XXIa, demgegenüber vergrößert;
- Fig. 21b: eine Schnittansicht durch die Kunststoffteilprofile entlang Schnittebene XXIb - XXI b gemäß Fig.21, jedoch demgegenüber in Vergrößerung und
- Fig. 22: schematisch vereinfacht den in Fig. 21 gezeigten Ablauf in einer Draufsicht gemäß Blickrichtung XXII in Fig. 21.

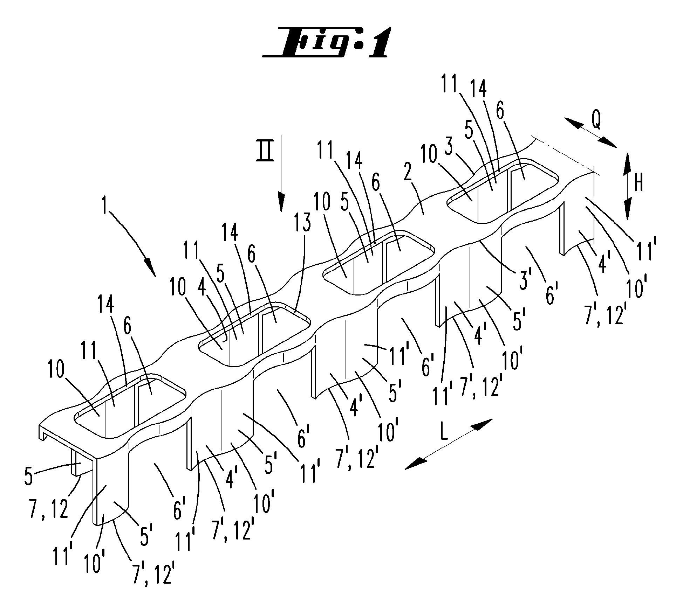

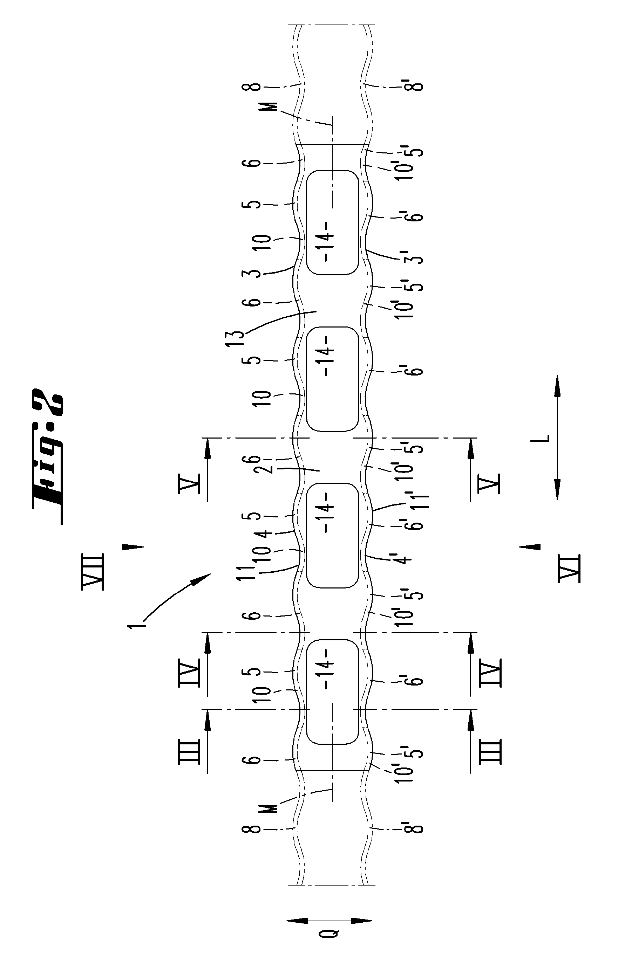

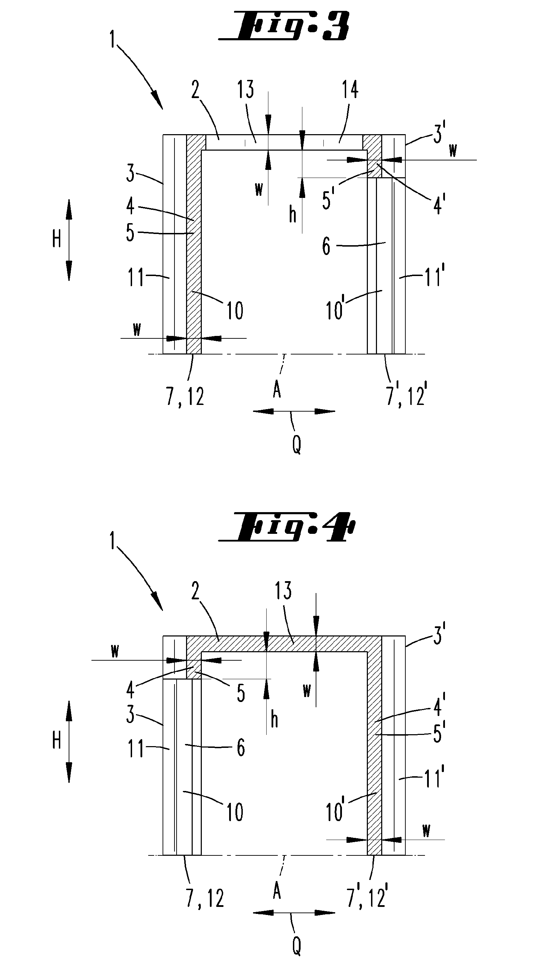

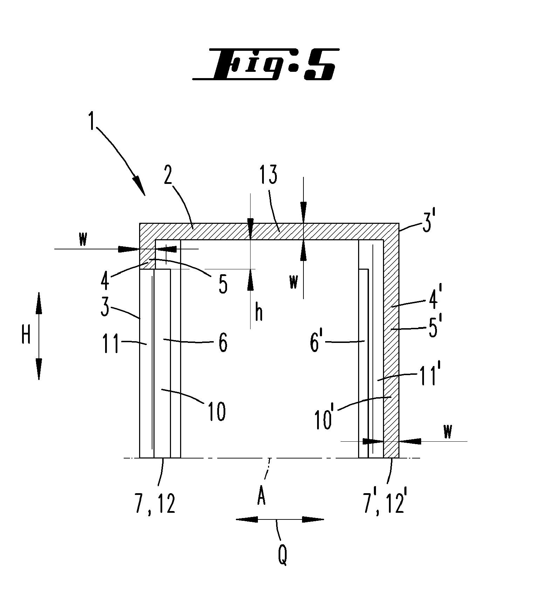

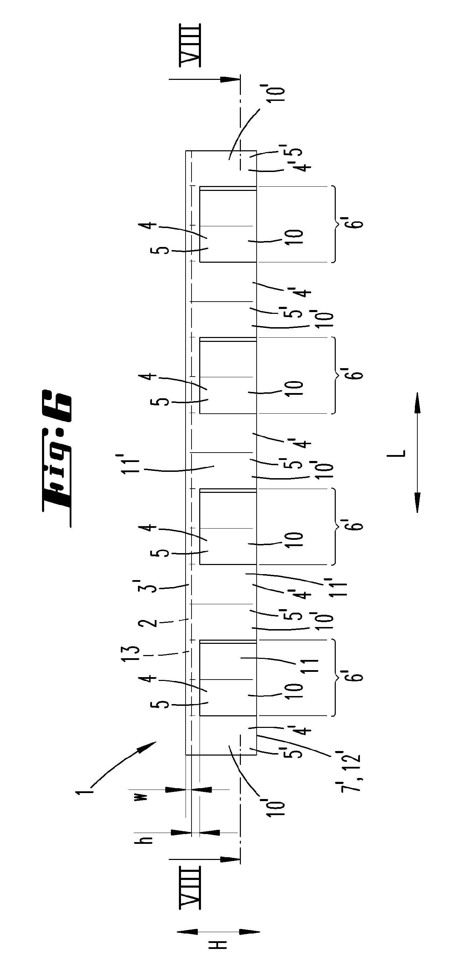

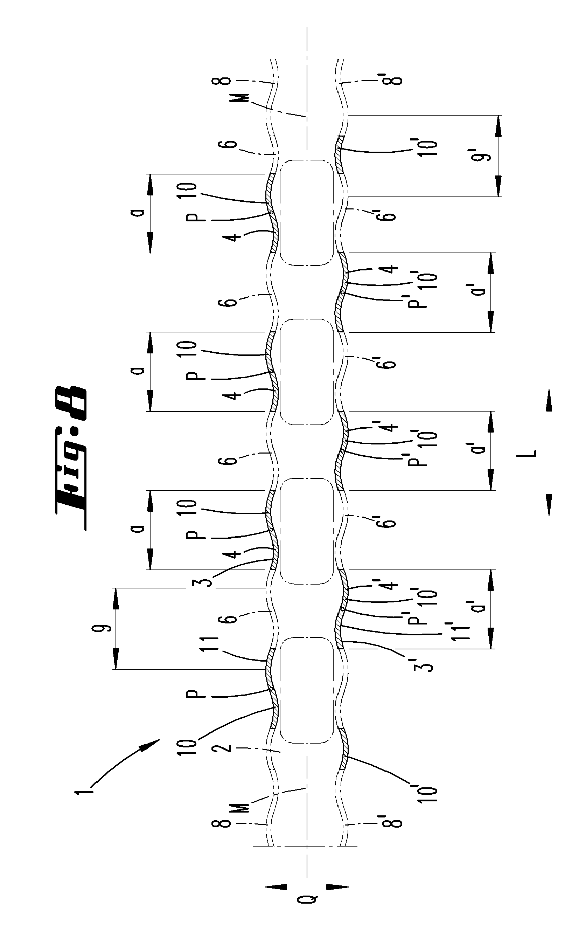

Mit Bezug auf die Figuren 1 bis 8 wird anhand eines Längenabschnittes ein erfindungsgemäßer Abstandhalter 1 gemäß einem ersten bevorzugten Ausführungsbeispiel vorgestellt. Dieser umfasst einen sich in einer gerade verlaufenden Längsrichtung L erstreckenden Längssteg 2. Dieser besitzt zwei Längsränder 3, 3', die in der quer zu der Längsrichtung L orientierten Querrichtung Q voneinander beabstandet sind. Ein erster Längsschenkel 4 ist an den Längssteg 2 einstückig an dessen erstem Längsrand 3 angeschlossen und erstreckt sich in zu der Längsrichtung L senkrechten Querschnitten senkrecht zu dem Längssteg 2. Ein zweiter Längsschenkel 4' ist einstückig an den zweiten Längsrand 3' angeschlossen und erstreckt sich in zu der Längsrichtung L senkrechten Querschnitten senkrecht zu dem Längssteg 2 (vgl. auch die in den Figuren 3 bis 5 gezeigten zu der Längsrichtung L senkrechten Querschnitte). Der erste Längsschenkel 4 weist eine Wandung 5 und sich quer durch die Wandung 5 erstreckende Durchgangsöffnungen 6 auf, und der zweite Längsschenkel 4' weist eine Wandung 5' und sich quer durch die Wandung 5' erstreckende Durchgangsöffnungen 6' auf. Die von dem Längssteg 2 abgewandten Längsränder 7, 7' der Wandungen 5, 5' spannen geometrisch gemeinsam eine zu der Längsrichtung L und der Querrichtung Q parallele Aufstellebene A des Abstandhalters 1 auf, zu der sich eine Höhenrichtung H senkrecht erstreckt (vgl. Figuren 3 bis 5). In der hier gewählten Terminologie erstreckt sich der Längssteg in Querrichtung Q über die gesamte Breite des Abstandhalters, d. h. in Höhenrichtung H setzt sich die Höhe des Abstandhalters aus der Höhe der Längsschenkel und der Wandstärke des Längssteges zusammen. In dem Beispiel ist vorgesehen, dass der Verlauf der Wandung 5 des ersten Längsschenkels 4 in der gesamten Erstreckung der Wandung 5 in Höhenrichtung H in jedem zu der Längsrichtung L und der Querrichtung Q parallelen Querschnitt wellenartig ist. In dem Beispiel ist ein durchgehend gerundeter, speziell ein sinusartiger, Verlauf gewählt. Entsprechend ist vorgesehen, dass der Verlauf der Wandung 5' des zweiten Längsschenkels 4' in der gesamten Erstreckung der Wandung 5' in Höhenrichtung H in jedem zu der Längsrichtung L und der Querrichtung Q parallelen Querschnitt wellenartig ist. Auch hier ist ein sinusartiger wellenartiger Verlauf gewählt. Gezeigt ist dies beispielsweise in Figur 8 für einen zu der Längsrichtung L und der Querrichtung Q parallelen Querschnitt, der mit der Schnittebene VIII - VIII aus Fig. 6 zusammenfällt. Ebenso veranschaulicht dies Figur 2 gestrichelt für den an den Längssteg 2 angrenzenden Querschnitt der Wandungen 5, 5'. Alternativ bestünde bspw. die Möglichkeit, dass der besagte wellenartige Verlauf der Wandungen 5, 5' auf einen auf die Höhenrichtung H bezogenen Höhenteilabschnitt der Wandungen 5, 5' begrenzt ist. In dem Beispiel ist der besagte wellenartige Verlauf der Wandungen 5, 5' in der gesamten Höhe, also auch angrenzend an die Aufstellebene A ausgebildet. Auch der Längssteg 2 besitzt an seinen beiden Längsrändern im Bereich der gesamten Wandstärke einen wellenartigen Verlauf bzw. eine wellenartige Kontur, die der wellenartigen Kontur an der Außenseite der angrenzenden Wandungen 5, 5' entspricht bzw. in diese übergeht. Der in Figur 1 gezeigte Abstandhalter besteht aus Kunststoff, bei dem es sich im Beispiel um Polyvinylchlorid (PVC) handelt, und ist mittels eines erfindungsgemäßen Verfahrens zur Herstellung von Abstandhaltern, welches einen Verfahrensschritt des Extrudierens beinhaltet, hergestellt worden.

Wie Figur 8 veranschaulicht, ist in dem dortigen zu der Längsrichtung L und der Querrichtung Q parallelen Querschnitt der Verlauf der Wandung 5 in allen Wandungsbereichen deckungsgleich zu einem ersten gedachten geometrischen Verlauf 8, der in der gesamten Länge des ersten Längsschenkels 4 durchgehend periodisch, in dem Beispiel durchgehend gerundet wellenförmig mit einer als 9 bezeichneten Periodenlänge, verläuft. Die Wandung 5' des zweiten Längsschenkels 4' verläuft in allen Wandungsbereichen deckungsgleich zu einem zweiten gedachten geometrischen Verlauf 8', der in der gesamten Länge des zweiten Längsschenkels 4' durchgehend periodisch, in dem Beispiel durchgehend gerundet wellenförmig mit einer zu 9 gleichen Periodenlänge 9', verläuft. Alle in dem Querschnitt von Figur 8 liegenden Wandungsbereiche, die schraffiert dargestellt sind, entsprechen dem zugeordneten geometrischen Verlauf 8 bzw. 8' hinsichtlich ihrer Form und ihrer Phasenlage. Zur Veranschaulichung, dass es sich bei den Verläufen 8, 8' um gedachte geometrische Verläufe handelt, sind diese in Figur 8 über die beiden Längsenden des Längenabschnittes hinaus gestrichelt angedeutet. In dem gezeigten Beispiel ist der Verlauf der Wandung 5 in sämtlichen zu der Längsrichtung L und der Querrichtung Q parallelen Querschnitten im Bereich der gesamten Höhe der Wandung 5 deckungsgleich zu dem ersten geometrischen Verlauf 8, und Entsprechendes gilt für die Wandung 5'. Figur 8 zeigt auch, dass die beiden gedachten geometrischen Verläufe 8, 8' in Querrichtung voneinander beabstandet sind und zueinander bezüglich einer zu der Längsrichtung L parallelen gedachten geometrischen Mittelachse M achsensymmetrisch verlaufen. In dem Beispiel sind die beiden periodisch gerundet wellenförmig verlaufenden Verläufe 8, 8' zueinander um eine halbe Periodenlänge in Längsrichtung L phasenverschoben. Die Durchgangsöffnungen 6 des Längsschenkels 4 sind in Längsrichtung L paarweise in einem einheitlichen Abstand a voneinander beabstandet. Zwischen den Durchgangsöffnungen 6 bildet die Wandung 5 Stützabschnitte 10. Die Durchgangsöffnungen 6' des Längsschenkels 4' sind in Längsrichtung L paarweise voneinander in einem einheitlichen Abstand a' beabstandet, dessen Länge dem Abstand a entspricht.

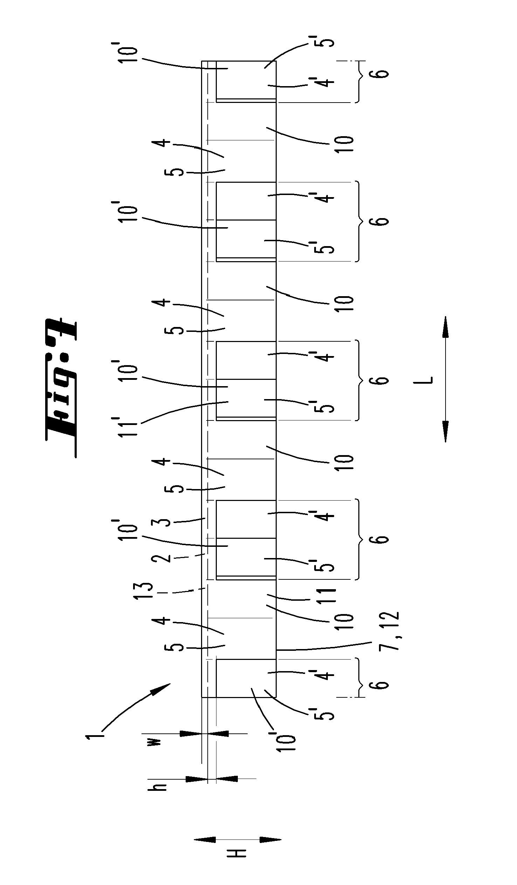

Wie bspw. die Figuren 3 bis 7 veranschaulichen, erstrecken sich die Wandungen 5, 5' in einem an den Längs steg 2 angrenzenden Höhenteilintervall h in der gesamten Länge des Abstandhalters durchgehend. Innerhalb jedes in dem Höhenteilintervall h liegenden, zu der Längsrichtung L und der Querrichtung Q parallelen Querschnittes entspricht der Verlauf der Wandung 5 durchgehend form- und phasengerecht dem ersten gedachten wellenartigen Verlauf 8 und entspricht der Verlauf der Wandung 5' in Längsrichtung durchgehend form-und phasengerecht dem zweiten gedachten wellenartigen Verlauf 8'. An jedem Stützabschnitt 10 entspricht der an die Aufstellebene A angrenzende Randabschnitt 12 hinsichtlich Form- und Phasenlage dem ersten gedachten periodischen Verlauf 8. An jedem Stützabschnitt 10' entspricht der dort an die Aufstellebene A angrenzende Randabschnitt 12' hinsichtlich seiner Form- und Phasenlage dem zweiten gedachten periodischen Verlauf 8'. Wie Figur 8 veranschaulicht, verläuft jeder Querschnitt der Stützabschnitte 10 bezüglich eines darin in dem Querschnitt mittigen Punktes P punktsymmetrisch. Entsprechend verlaufen die zu der Aufstellebene A parallelen Querschnitte der Stützabschnitte10' zu einem darin jeweils mittigen Punkt P' punktsymmetrisch. In dem Beispiel der Figuren 1 bis 8 besitzen die Durchgangsöffnungen 6, 6' in einer zu der Querrichtung Q parallelen Projektionsbetrachtung (vgl. die Figuren 6, 7) rechteckigen Querschnitt. In Längsrichtung L entspricht die Erstreckung der Durchgangsöffnungen 6, 6' der Periodenlänge 9, 9' der wellenartigen Verläufe 8, 8'.

Die Wandung 13 des Längssteges 2 erstreckt sich durchgehend eben. In dem Beispiel der Figuren 1 bis 8 wird sie von Durchgangsöffnungen 14 durchbrochen, welche jeweils die Kontur eines Rechteckes mit gerundeten Ecken besitzen.

Die Figuren 1 bis 8 zeigen wie schon angesprochen einen Längenabschnitt eines bevorzugten Abstandhalters. Es versteht sich, dass der Abstandhalter eine im Vergleich zu den Figuren größere Länge besitzen kann, innerhalb der sich der wellenartige Verlauf der Wandungen 5, 5' fortsetzt. Ebenso besteht die Möglichkeit, dass der Abstandhalter eine im Vergleich zu den Figuren kürzere Länge besitzt.

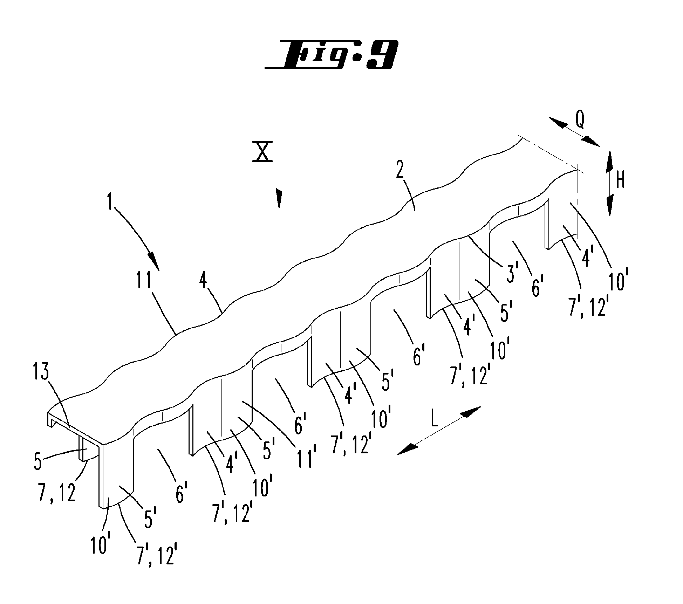

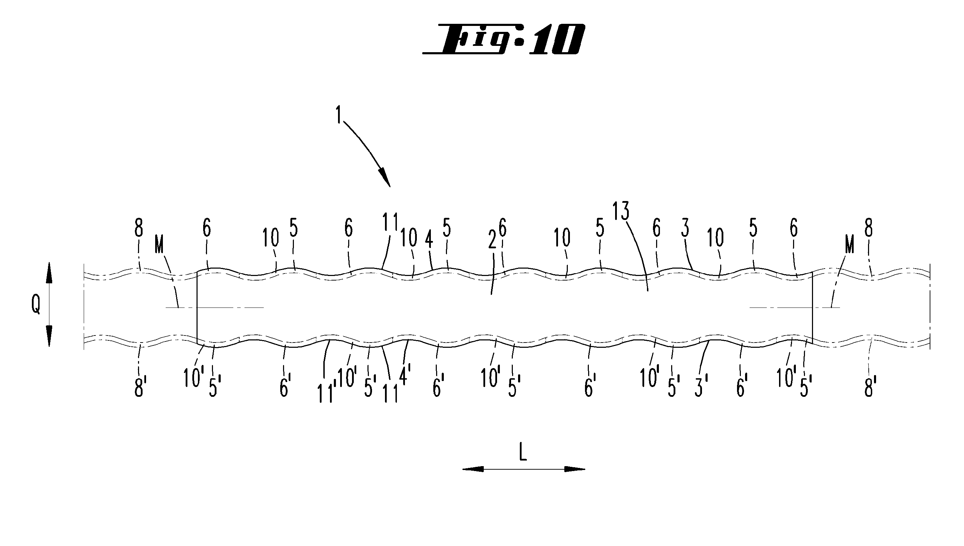

Der in den Figuren 9 und 10 anhand eines Längenabschnittes dargestellte erfindungsgemäße Abstandhalter 1 gemäß einem zweiten bevorzugten Ausführungsbeispiel unterscheidet sich von dem ersten Ausführungsbeispiel dadurch, dass dort die Wandung 13 des Längssteges 2 geschlossen ausgebildet ist. Dies bedeutet, dass dort keine Durchgangsöffnungen 14 vorhanden sind.

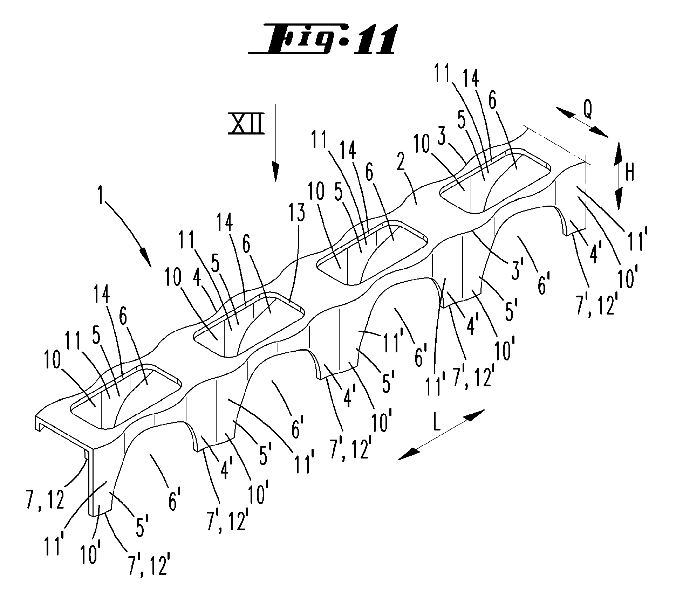

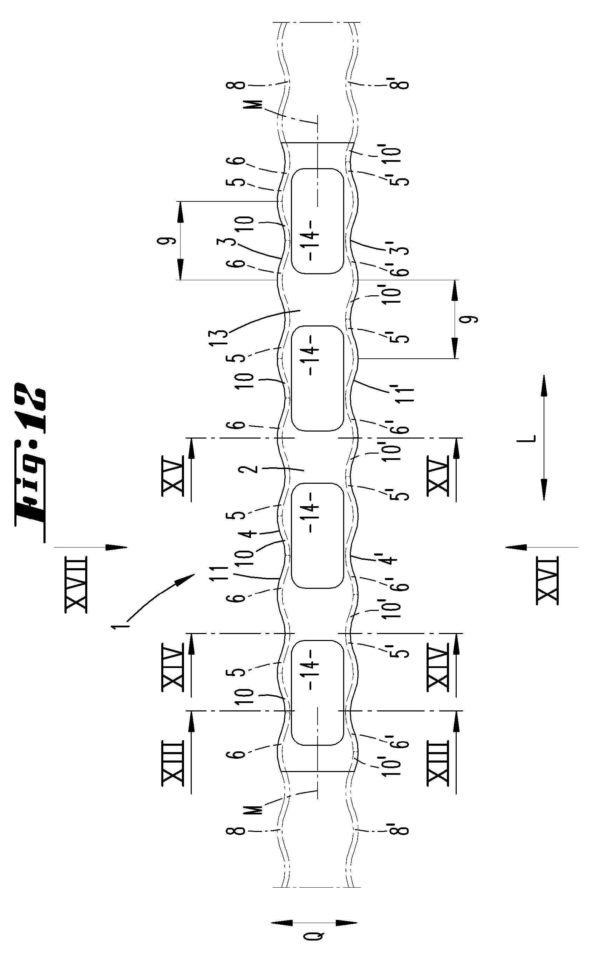

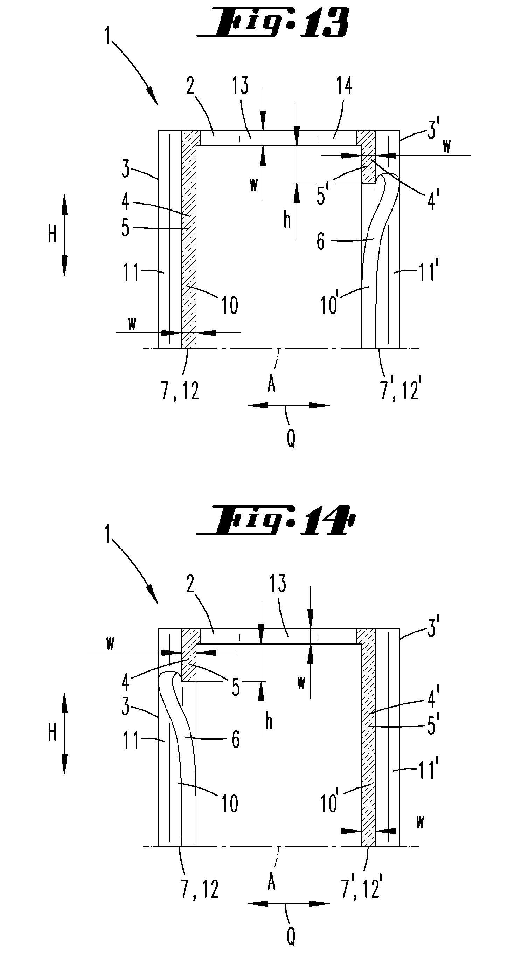

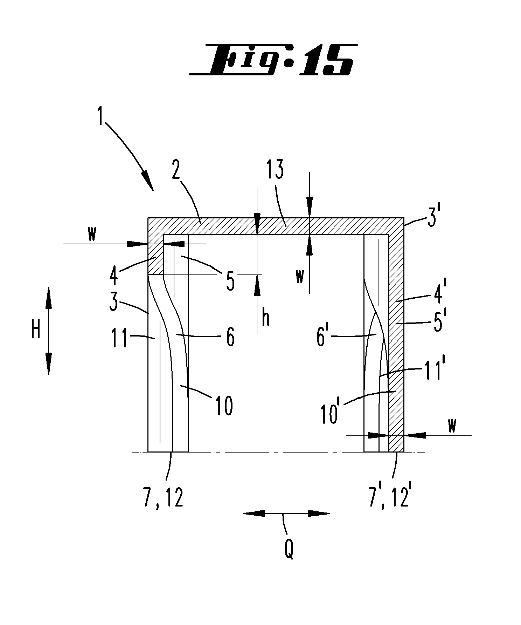

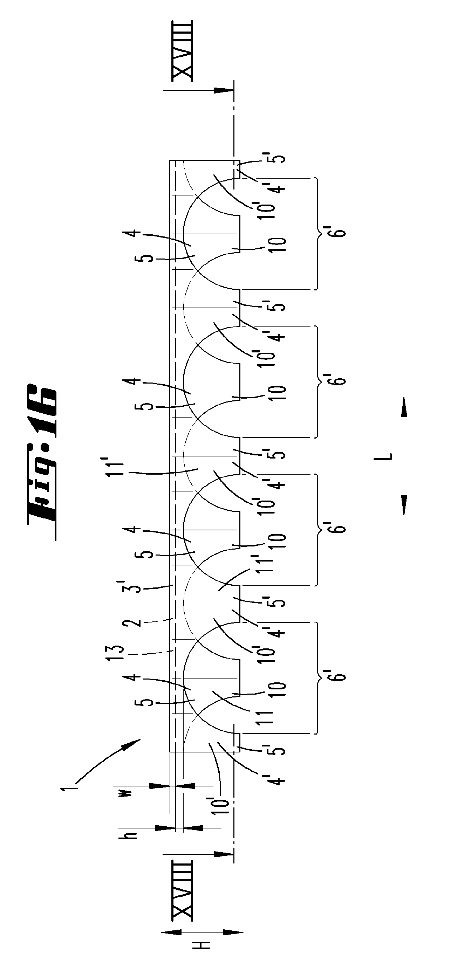

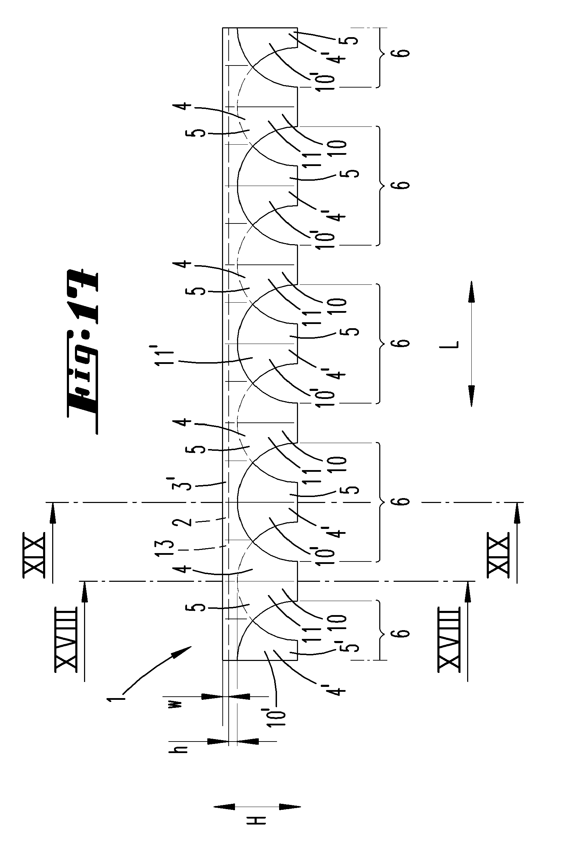

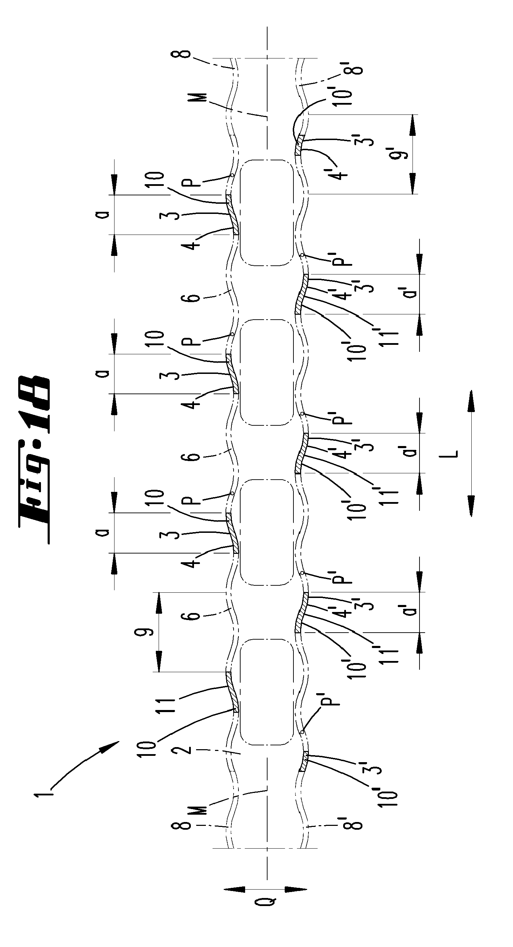

Mit Bezug auf die Figuren 11 bis 18 wird anhand eines Längenabschnittes ein erfindungsgemäßer Abstandhalter 1 gemäß einem dritten bevorzugten Ausführungsbeispiel vorgestellt. Ein Unterschied zu dem ersten Ausführungsbeispiel (Figuren 1 bis 8) liegt, darin, dass die Durchgangsöffnungen 6 und 6' einen halbkreisförmigen Querschnitt besitzen, wie dies insbesondere die Figuren 16, 17 verdeutlichen.

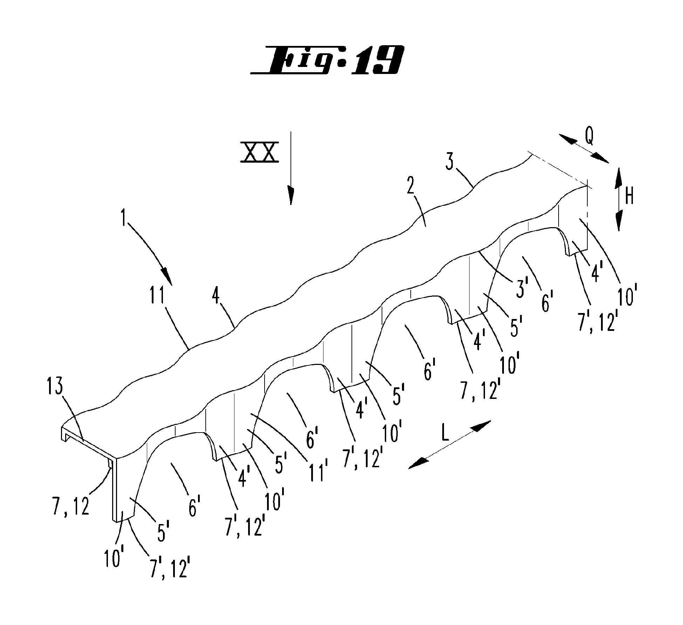

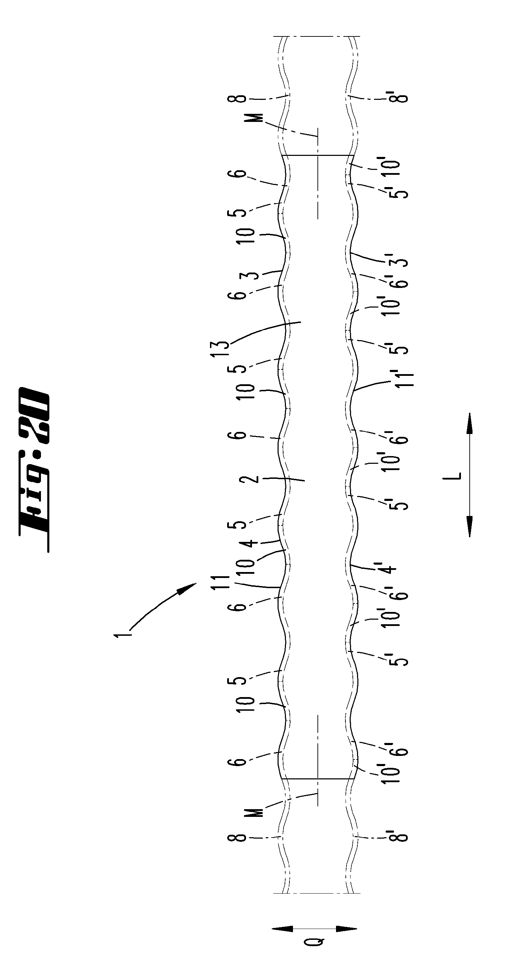

Die Figuren 19 und 20 betreffen einen erfindungsgemäßen Abstandhalter 1 gemäß einem vierten bevorzugten Ausführungsbeispiel. Dieser unterscheidet sich von dem dritten Ausführungsbeispiel (Figuren 11 bis 18) dadurch, dass dort die Wandung 13 des Längssteges 2 durchgehend geschlossen ist.

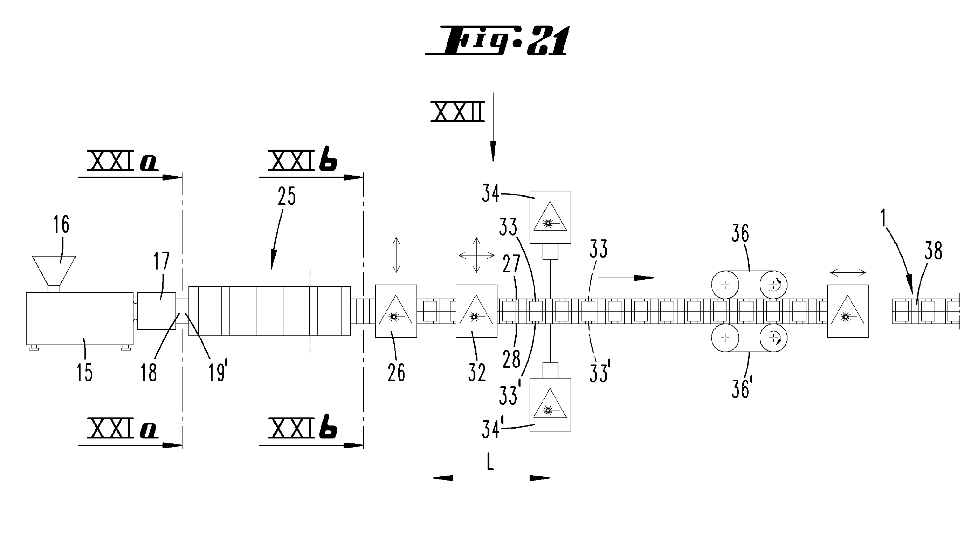

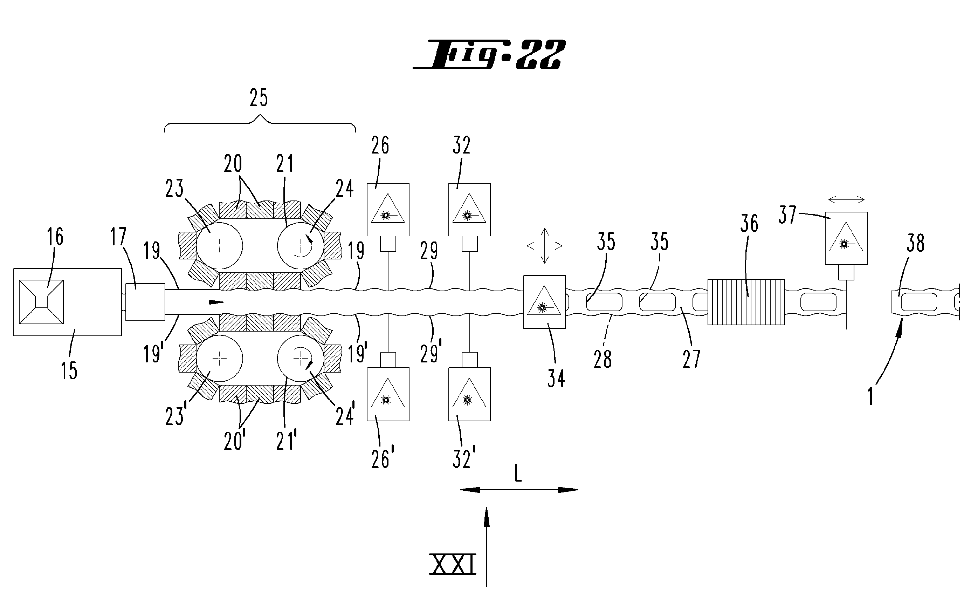

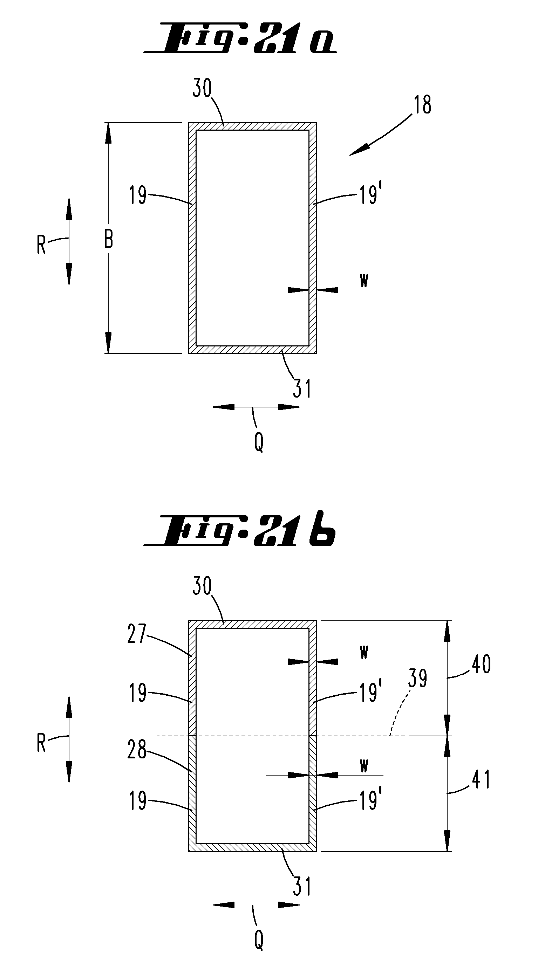

Mit Bezug auf die schematischen Darstellungen der Figuren 21, 21a und 22 wird ein erfindungsgemäßes Verfahren zur Herstellung von Kunststoffhohlprofilen, insbesondere von Abstandhaltern aus Kunststoff, anhand eines bevorzugten Ausführungsbeispiels vorgestellt. Dabei wird mittels eines Extruders 15, in dessen Einfüllöffnung 16 Kunststoffrohmaterial (bspw. Kunststoffgranulat, Kunststoffpulver oder dergleichen) eingegeben werden kann, mittels Schmelzens des Kunststoffrohmaterials plastifizierter Kunststoff bereitgestellt. Der plastifizierte, einer Paste vergleichbar verformbare Kunststoff wird durch eine Extrusionsdüse 17 hindurchgepresst, deren Düsenspalt entlang einer rechteckigen Kontur verläuft. Dadurch wird ein Kunststoffhohlprofil 18 hergestellt, dessen in Figur 21a gezeigter Profilquerschnitt (also dessen zur Längs- bzw. Profilrichtung quer liegender Querschnitt) hohl ist und an seinem äußeren Umfang rechteckig und geschlossen ist. Das aus der Extrusionsdüse 17 austretende Kunststoffhohlprofil ist mit 18 bezeichnet. Zwei sich in dem Profilquerschnitt gegenüberliegende Wandungen 19,19' des noch erhitzten und daher noch verformbaren Kunststoffhohlprofils 18, werden nach dem Austritt aus der Extrusionsdüse 17 so verformt, dass sie im Bespiel jeweils in ihrem ganzen auf den Profilquerschnitt bezogenen Erstreckungsbereich, der in Figur 21a als B bezeichnet ist und der im Profilquerschnitt auf die Haupterstreckungsrichtung R), also auf die Richtung der größten Erstreckung der jeweiligen Wandung bezogen ist, in ihren entlang der Längsrichtung L verlaufenden Querschnitten (vgl. Figur 22) einen in Längsrichtung L durchgehenden wellenartigen Verlauf besitzen. In Figur 21a ist der Erstreckungsbereich B der Wandungen 19, 19' exemplarisch auf die gesamte Erstreckung des Profilquerschnitts bezogen, so dass die Wandungen 30, 31 einstückig quasi zwischen den Wandungen 19,19' liegen. Stattdessen könnte man die Wandungen 19,19' auch abweichend als einstückig geometrisch zwischen den Wandungen 30, 31 liegend definieren. Unabhängig davon wird in dem anhand der Figuren beschriebenen Beispiel das Kunststoffhohlprofil 18 an den beiden zueinander entgegengesetzten Seiten nach dem Austritt aus der Extrusionsdüse 17 so verformt, dass die beiden in Figur 21a links und rechts liegenden äußeren Seitenflächen in der gesamten quer zu der Längsrichtung L und der Querrichtung Q bestehenden Erstreckung in zu dieser Erstreckungsrichtung senkrechten Querschnitten eine wellenartige Kontur aufweisen. Wie Figur 21a zeigt, besitzt jede der verformten Wandungen 19, 19' vor und nach dieser Verformung innerhalb des Profilquerschnittes einen geraden Verlauf mit konstanter Wandstärke. Der in Figur 22 erkennbare wellenartige Verlauf der Wandungen 19,19' entspricht hinsichtlich seiner Form und seiner Periodenlänge in dem Beispiel den in den vorangehenden Figuren gezeigten gedachten geometrischen Verläufen 8 und 8'.

Der wellenartige Verlauf der Wandung 19 wird mittels Formbacken 20 und der wellenartige Verlauf der Wandung 19' mittels Formbacken 20' eines Korrugators 25 erzeugt. Dessen Formbacken 20 bzw. 20' besitzen jeweils eine zur Einwirkung auf das Kunststoffhohlprofil 18 bestimmte Arbeitsoberfläche 22, 22', deren Längserstreckung einer Periodenlänge 9 bzw. 9' der wellenartigen Verläufe 8 bzw. 8' entspricht und einen entsprechenden wellenartigen Verlauf besitzt. Die Formbacken 20 sind gemeinsam an einem geschlossenen Treibriemen befestigt, und zwar außerhalb des Treibriemens 21 mit nach außen weisender wellenartiger Arbeitsoberfläche 22. Der Triebriemen 21 ist um zwei Rollen 23, 24 gespannt, von denen bspw. die Rolle 24 motorisch angetrieben ist. Wird die Rolle 24, wie in Figur 22 mit einem Pfeil angedeutet, im Uhrzeigersinn angetrieben, werden die Formbacken 20 in Blickrichtung von Figur 21 von links nach rechts, also in Extrusionsrichtung, bewegt und dabei quer zu der Längsrichtung L gegen die Wandung 19 gedrückt. Wie schematisch angedeutet, können innerhalb dieses Kontaktbereichs mehrere Formbacken 20 in Längsrichtung aneinander angrenzen, so dass ihre Arbeitsoberflächen 22 einen durchgehenden periodischen wellenartigen Verlauf bilden. Entsprechendes gilt für die Formbacken 20' mit Arbeitsoberflächen 22', den Triebriemen 21' sowie die Rollen 23' und 24', die zur Verformung der Wandung 19' dienen. Es versteht sich, dass sich abhängig von der Form der Arbeitsoberflächen 22, 22', die variieren kann, entsprechend unterschiedliche wellenartige Verläufe in den Wandungen 19 und 19' erzielen lassen.

Bei dem gezeigten Verfahren werden die Wandungen 19,19' von den mit ihnen in Kontakt stehenden Formbacken 20, 20' mittels Einrichtungen zur Erzeugung von Unterdruck (nicht näher dargestellt) angesaugt, so dass sich die Wandungen 19, 19' an die Arbeitsoberflächen 22, 22' formgerecht anschmiegen. Alternativ oder kombinativ kann dazu in dem hohlen Inneren des Kunststoffhohlprofils 18, bspw. mittels durch das Innere der Extrusionsdüse zugeführtem Druckfluid (bspw. Druckluft), ein Überdruck erzeugt werden. Um den erzeugten wellenartigen Verlauf der Wandungen 19,19' zu fixieren, werden die Wandungen 19,19' bzw. das Kunststoffhohlprofil 18 gekühlt. In dem Beispiel erfolgt dies mittels gekühlter Formbacken 20, 20'. In einem in Bewegungsrichtung des Kunststoffhohlprofils 18 (d.h. insofern auch zeitlich) nachfolgenden Verfahrensschritt wird das Kunststoffhohlprofil 18, das im Beispiel einen Profilquerschnitt mit am Umfang geschlossenem Rand besitzt (vgl. die im Vergleich zu Fig. 21 vergrößerte Figur 21a) mittels zweier Lasereinrichtungen 26, 26' in Längsrichtung L in einer Trennebene durchtrennt, so dass die beiden in Figur 21b gezeigten Kunststoffteilprofile 27, 28 resultieren. Der jeweilige Laserstrahl ist durch einen Strich angedeutet.

In dem gezeigten Verfahrensbeispiel werden mittels weiterer Lasereinrichtungen 32, 32' Durchgangsöffnungen 33 in die Wandungen 19,19' der Kunststoffteilprofile 27, 28 eingebracht. Mittels weiterer Lasereinrichtungen 34 werden Durchgangsöffnungen 35 in die Wandungen 30, 31 der Kunststoffteilprofile 27, 28 eingebracht. In dem Beispiel sind die Lasereinrichtungen 26, 26', 32, 32', 34, 34' jeweils paarweise angeordnet, und ihr Laserstrahl ist entgegengesetzten Seiten auf das Kunststoffhohlprofil 18 bzw. auf die Kunststoffteilprofile 27, 28 gerichtet. Mit den Pfeilen sind symbolisch mögliche Verfahrrichtungen der Lasereinrichtungen angedeutet.

Bei dem in den Figuren 21, 22 gezeigten Verfahren wird eine Förderbewegung des Kunststoffhohlprofils 18 bzw. der Kunststoffteilprofile 27, 28 in Blickrichtung von links nach rechts mittels eines an sich bekannten sog. Raupenabzugs 36 erreicht bzw. unterstützt Mit 37 ist eine weitere Lasereinrichtung bezeichnet, mittels deren Laserstrahl (dieser ist wie bei den übrigen Lasereinrichtungen als Strich angedeutet) die Kunststoffteilprofile 27, 28 zur Erzeugung von Längenabschnitten 38 quer zur Längsrichtung L durchtrennt werden.

Die mittels des in den Figuren 21, 22 exemplarisch gezeigten Verfahrens hergestellten Längenabschnitte 38 entsprechen den mit Bezug auf die Figuren 1 bis 8 beschriebenen Abstandhaltern 1.

Wie Figur 21b zeigt, besitzen die beiden Kunststoffteilprofile 27, 28 in dem Beispiel, bezogen auf den Profilquerschnitt, quer zu ihrer Schnittebene 39 zueinander gleiche Erstreckungen 40, 41. Das gezeigte Verfahren ermöglicht somit, in einem gemeinsamen Durchlauf gleichzeitig zwei zueinander gleiche Kunststoffteilprofile 27, 28 herzustellen. Alternativ bestünde die Möglichkeit, mittels des erfindungsgemäßen Verfahrens in einem Durchlauf gleichzeitig zwei zueinander unterschiedliche Kunststoffteilprofile 27, 28 herzustellen. Zum Beispiel bestünde die Möglichkeit, die beiden Lasereinrichtungen 26 in der in Figur 21 mittels eines Pfeils angedeuteten Verfahrrichtung beide zu verfahren, so dass die in Figur 21b gezeigte Schnittebene 39 nicht mehr mittig durch den Profilquerschnitt führt. Somit könnten in einem Produktionsschritt zwei Kunststoffteilprofile 27, 28 mit voneinander unterschiedlichen quer zu der Schnittebene gemessenen Erstreckungen 40, 41 hergestellt werden. Auch die Form und die Anzahl der Durchgangsöffnungen kann von den Abbildungen abgewandelt werden, indem die Lasereinrichtungen in zur Erzielung der jeweils gewünschten Form und Anzahl geeigneten Weise, bspw. mittel programmgesteuerter Motoren, verfahren werden. Aus dem Vorangehenden folgt, dass mit nur einer Werkzeugausrüstung Abstandhalter mit unterschiedlichen Geometrien hergestellt werden können. Dies wird als Vorteil, insbesondere gegenüber dem Spritzgussverfahren, angesehen.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Ein Abstandhalter, der dadurch gekennzeichnet ist, dass der Verlauf 11 der Wandung 5 des ersten Längsschenkels 4 entweder in zumindest einem auf die Höhenrichtung H bezogenen, insbesondere an die Aufstellebene A angrenzenden, Höhenteilintervall der Wandung 5 oder in der gesamten Höhe der Wandung 5 in zu der Längsrichtung L und der Querrichtung Q parallelen Querschnitten wellenartig ist und dass der Verlauf 11' der Wandung 5' des zweiten Längsschenkels 4' entweder in zumindest einem auf die Höhenrichtung H bezogenen, insbesondere an die Aufstellebene A angrenzenden, Höhenteilintervall der Wandung 5' oder in der gesamten Höhe der Wandung 5' in zu der Längsrichtung L und der Querrichtung Q parallelen Querschnitten wellenartig ist.
Ein Abstandhalter, der dadurch gekennzeichnet ist, dass der Abstandhalter aus Kunststoff, insbesondere aus PVC und/oder PS und/oder PE wie bspw. HDPE oder LDPE, oder dergleichen, insbesondere mittels eines Extrusionsverfahrens, hergestellt ist.
Ein Abstandhalter, der dadurch gekennzeichnet ist, dass der Verlauf 11 der Wandung 5 des ersten Längsschenkels 4 zumindest einem an den Längssteg 2 angrenzenden Höhenteilintervall h der Wandung 5 in jedem zu der Längsrichtung und der Querrichtung parallelen Querschnitt wellenartig ist und dass der Verlauf 11 der Wandung 5' des zweiten Längsschenkels 4' in zumindest einem an den Längssteg 2 angrenzenden Höhenteilintervall h der Wandung 5' in jedem zu der Längsrichtung L und der Querrichtung Q parallelen Querschnitt wellenartig ist.
Ein Abstandhalter, der dadurch gekennzeichnet ist, dass in den genannten, zu der Längsrichtung L und zu der Querrichtung Q parallelen Querschnitten der Verlauf 11 der Wandung 5 des ersten Längsschenkels 4 in allen Wandungsbereichen deckungsgleich ist zu einem ersten gedachten geometrischen Verlauf 8, der in der gesamten Länge des ersten Längsschenkels 4 durchgehend periodisch verläuft, und dass in den genannten, zu der Längsrichtung L und zu der Querrichtung Q parallelen Querschnitten der Verlauf 11' der Wandung 5' des zweiten Längsschenkels 4' in allen Wandungsbereichen deckungsgleich ist zu einem zweiten gedachten geometrischen Verlauf 8', der in der gesamten Länge des zweiten Längsschenkels 4' durchgehend periodisch verläuft.
Ein Abstandhalter, der dadurch gekennzeichnet ist, dass der erste geometrische Verlauf 8 und/oder der zweite geometrische Verlauf 8' durchgehend gerundet, insbesondere sinusförmig, oder zick-zack-förmig oder trapezförmig oder rechteckförmig geformt ist.
Ein Abstandhalter, der dadurch gekennzeichnet ist, dass in einer Projektionsbetrachtung auf einen der genannten, zu der Längsrichtung L und der Querrichtung Q parallelen Querschnitte, in dem alle Wandungsbereiche des ersten Längsschenkels 4 zu dem ersten gedachten geometrischen Verlauf 8 und alle Wandungsbereiche des zweiten Längsschenkels 4' zu dem zweiten gedachten geometrischen Verlauf 8' deckungsgleich sind, der erste und der zweite gedachte geometrische Verlauf 8, 8' in ihrer gesamten Länge in Querrichtung Q voneinander beabstandet sind und/ oder zueinander bezüglich einer zu der Längsrichtung L parallelen geometrischen Mittelachse M achsensymmetrisch, insbesondere zueinander um eine halbe Periodenlänge in Längsrichtung L phasenverschoben, verlaufen.
Ein Abstandhalter, der dadurch gekennzeichnet ist, dass jeder Längsschenkel 4, 4' in Längsrichtung L voneinander beabstandete und auf der von dem Längssteg 2 abgewandten Seite offene Durchgangsöffnungen 6, 6' aufweist, zwischen denen die Wand 5, 5' des Längsschenkels 4, 4' Stützabschnitte 10, 10' bildet.
Ein Abstandhalter, der dadurch gekennzeichnet ist, dass sich die Wandung 5 des ersten Längsschenkels 4 zumindest in einem an den Längssteg 2 angrenzenden Höhenteilintervall h in der gesamten Länge des Abstandhalters 1 erstreckt und in dem Höhenteilintervall h in jedem zu der Längsrichtung L und der Querrichtung Q parallelen Querschnitt in ihrem Verlauf durchgängig form-und phasengerecht dem ersten gedachten wellenartigen Verlauf 8 entspricht und dass sich die Wandung 5' des zweiten Längsschenkels 4' zumindest in dem an den Längssteg 2 angrenzenden Höhenteilintervall h in der gesamten Länge des Abstandhalters 1 erstreckt und in dem Höhenteilintervall h in jedem zu der Längsrichtung L und der Querrichtung Q parallelen Querschnitt in ihrem Verlauf durchgängig form- und phasengerecht dem zweiten gedachten wellenartigen Verlauf 8' entspricht.
Ein Abstandhalter, der dadurch gekennzeichnet ist, dass an jedem Stützabschnitt 10 des ersten Längsschenkels 4 der von dem Längssteg 2 abgewandte, an die Aufstellebene A angrenzend verlaufende Randabschnitt 12 hinsichtlich seiner Form und Phasenlage mit dem ersten gedachten periodischen Verlauf 8 übereinstimmt und dass an jedem Stützabschnitt 10' des zweiten Längsschenkels 4' der von dem Längssteg 2 abgewandte, angrenzend an die Aufstellebene A verlaufende Randabschnitt 12' hinsichtlich seiner Form und Phasenlage mit dem zweiten gedachten periodischen Verlauf 8' übereinstimmt.
Ein Abstandhalter, der dadurch gekennzeichnet ist, dass an jedem Stützabschnitt 10,10' zumindest der von dem Längssteg 2 abgewandte, parallel zur der Aufstellebene A verlaufende Randabschnitt 12, 12' zumindest in einem Längenabschnitt einen bezüglich zumindest eines Punktes P, P' punktsymmetrischen Verlauf oder einen bezüglich einer geometrischen Achse achsensymmetrischen Verlauf aufweist.
Ein Abstandhalter, der dadurch gekennzeichnet ist, dass die Durchgangsöffnungen 6, 6' der Längsschenkel 4, 4' in einer zur Querrichtung Q parallelen Projektionsbetrachtung halbkreisförmigen oder rechteckigen Querschnitt aufweisen und/oder dass in der Längsrichtung L des Abstandhalters 1 die Länge der Durchgangsöffnungen 6, 6' der zueinander gleich großen Periodenlänge der beiden geometrischen wellenartigen Verläufe 8, 8' entspricht.
Ein Abstandhalter, der dadurch gekennzeichnet ist, dass die Wandungen 5, 5' des ersten Längsschenkels 4 und des zweiten Längsschenkels 4' jeweils eine einheitliche und insbesondere eine zueinander einheitliche Wandstärke w besitzen.
Ein Abstandhalter, der dadurch gekennzeichnet ist, dass die Wandung 13 des Längsstegs 2 durchgehend eben verläuft und /oder dass in dem Längssteg Durchgangsöffnungen 14 ausgebildet sind, die insbesondere die Kontur eines Rechteckes, insbesondere mit gerundeten Ecken, aufweisen.

Ein Verfahren, das dadurch gekennzeichnet ist, dass eine oder mehrere, insbesondere zwei einander im Profilquerschnitt gegenüberliegende, Wandungen (19,19') des verformbaren Kunststoffhohlprofils (18) verformt werden, so dass sie jeweils in ihrem teilweisen oder ganzen, im Profilquerschnitt auf ihre Haupterstreckungsrichtung (R) bezogenen Erstreckungsbereich (B) in zu der Haupterstreckungsrichtung (R) senkrechten Querschnitten einen wellenartigen Verlauf (29, 29') besitzen, wobei insbesondere vorgesehen ist, dass jede der verformten Wandungen (19,19') in zu der Längsrichtung (L) senkrechten Profilquerschnitten einen geraden Verlauf besitzt.

Ein Verfahren, das dadurch gekennzeichnet ist, dass der jeweilige wellenartige Verlauf 29, 29' der Wandungen 19,19' mittels Formbacken 20, 20' eines Korrugators 25 erzeugt wird.

Ein Verfahren, das dadurch gekennzeichnet ist, dass der jeweilige wellenartige Verlauf 29, 29' durchgehend gerundet, insbesondere sinusförmig, oder zick-zack-förmig oder trapezförmig oder rechteckförmig oder dergleichen verläuft.

Ein Verfahren, das dadurch gekennzeichnet ist, dass die Wandungen 19,19' zur Erzielung des wellenartigen Verlaufes von Formbacken 20, 20' des Korrugators 25 mittels Unterdruck angesaugt werden und/ oder von dem hohlen Profilinneren des Kunststoffhohlprofils 18 her mittels Überdruck gegen die Formbacken 20, 20' gepresst werden und/oder dass zur Fixierung des jeweiligen wellenartigen Verlaufs 29, 29' die Wandungen 19, 19' mittels der Formbacken 20, 20' gekühlt werden.

Ein Verfahren, das dadurch gekennzeichnet ist, dass es sich bei dem Kunststoffhohlprofil 18 um ein solches handelt, das im Profilquerschnitt einen am Umfang geschlossenen Rand besitzt, und dass das Verfahren, insbesondere nach dem Fixieren des wellenartigen Verlaufs 29, 29' oder der wellenartigen Verläufe (19, 19'), den Schritt umfasst, dass das Kunststoffhohlprofil 18, insbesondere mittels zumindest eines Laserstrahls, in Längsrichtung L in zwei Kunststoffteilprofile 26, 27 zerteilt wird, von denen zumindest ein Kunststoffteilprofil 26, 27, insbesondere beide Kunststoffteilprofile 26, 27, einen U-profilartigen Profilquerschnitt besitzt oder besitzen.

Ein Verfahren, das dadurch gekennzeichnet ist, dass in eine oder in mehrere Wandungen 19, 19', 30, 31 des Kunststoffhohlprofils 18 oder zumindest eines der Kunststoffteilprofile 27, 28 mittels einer oder mehrerer Lasereinrichtungen 32, 34 Durchgangsöffnungen 33, 35 eingebracht werden.

Ein Verfahren, das dadurch gekennzeichnet ist, dass das Kunststoffhohlprofil 18 oder dass das oder die Kunststoffteilprofile 27, 28 mittels einer oder mehrerer Lasereinrichtungen 37 zur Erzeugung von Längenabschnitten 38 quer zur Längsrichtung L durchtrennt wird oder werden.

Ein Verfahren, das dadurch gekennzeichnet ist, dass das Kunststoffhohlprofil 18 mittels einer oder mehrerer Lasereinrichtungen 26 in Längsrichtung L des Kunststoffhohlprofils 18 in zumindest zwei Kunststoffteilprofile 27, 28 zerteilt wird, von denen zumindest ein Kunststoffteilprofil 27, 28, insbesondere zwei Kunststoffteilprofile 27, 28, als Profilquerschnitt einen Hohlquerschnitt mit am Umfang offenen Rand besitzen, und/oder dass mittels einer oder mehrerer Lasereinrichtungen 32, 34 Durchgangsöffnungen 33, 35 in eine oder mehrere Wandungen 19, 19', 30, 31 des Kunststoffhohlprofils 18 und/oder in Wandungen 19, 19', 30, 31 von einem oder mehreren Kunststoffteilprofilen 27, 28, eingebracht werden.

Ein Verfahren, das dadurch gekennzeichnet ist, dass die beiden Kunststoffteilprofile 27, 28 bezogen auf den Profilquerschnitt quer zu ihrer Schnittebene 39 zueinander gleiche oder unterschiedliche Erstreckungen 40, 41 aufweisen.

Ein Abstandhalter, umfassend ein nach einem oder mehreren der Ansprüche 14-22 hergestelltes Kunststoffhohlprofil 18 oder Kunststoffteilprofil 27, 28, wobei es sich insbesondere um einen Abstandhalter 1 nach einem oder mehreren der vorangehenden Ansprüche 1 bis 13 handelt.

**Bezugszeichenliste**

| | | | |
|---|---|---|---|
| 1 | Abstandhalter | 19 | Wandungen |
| 2 | Längssteg | 19' | Wandungen |
| 3 | Längsränder | 20 | Formbacken |
| 3' | Längsränder | 21' | Formbacken |
| 4 | Längsschenkel | 22 | Arbeitsoberfläche |
| 4' | Längsschenkel | 22' | Arbeitsoberfläche |
| 5 | Wandung | 23 | Rolle |
| 5' | Wandung | 23' | Rolle |
| 6 | Durchgangsöffnungen | 24 | Rolle |
| 6' | Durchgangsöffnungen | 24' | Rolle |
| 7 | untere Längsränder | 25 | Korrugator |
| 7' | untere Längsränder | 26 | Lasereinrichtung |
| 8 | gedachter geometrischer Verlauf | 27 | Kunststoffteilprofil |
| 8' | gedachter geometrischer Verlauf | 28 | Kunststoffteilprofil |
| 9 | Periodenlänge | 29 | wellenartiger Verlauf |
| 9' | Periodenlänge | 29' | wellenartiger Verlauf |
| 10 | Stützabschnitte | 30 | Wandung |
| 10' | Stützabschnitte | 31 | Wandung |
| 11 | wellenartiger Verlauf | 32 | Lasereinrichtungen |
| 12 | Randabschnitte in der Ebene | 33 | Durchgangsöffnungen |
| 12' | Randabschnitte in der Ebene | 34 | Lasereinrichtungen |
| 13 | Wandung | 35 | Durchgangsöffnungen |
| 14 | Durchgangsöffnungen | 36 | Raupenabzug |
| 15 | Extruder | 37 | Lasereinrichtung |
| 16 | Eingangsöffnung | 38 | Längenabschnitt |
| 17 | Extrusionsdüse | 39 | Schnittebene |
| 18 | Kunststoffhohlprofil | 40 | Erstreckung |
| 41 | Erstreckung | | |
| | | | |
| A | Aufstellebene | | |
| B | Erstreckungsbereich | | |
| H | Höhenrichtung | | |
| L | Längsrichtung | | |
| Q | Querrichtung | | |
| M | Mittelachse | | |
| P | Punkt | | |
| P' | Punkt | | |
| | | | |
| a | Abstand der Öffnungen | | |
| a' | Abstand der Öffnungen | | |
| h | Höhenteilintervall | | |

## Patentansprüche

1. Abstandhalter (1), insbesondere zur Abstützung von Bewehrungsstäben und/oder Bewehrungsmatten, umfassend einen sich in einer, insbesondere gerade verlaufenden, Längsrichtung (L) erstreckenden Längssteg (2), der zwei in einer Querrichtung (Q) voneinander beabstandete Längsränder (3, 3') aufweist, wobei der Abstandhalter (1) einen ersten Längsschenkel (4) umfasst, der an den Längssteg (2) einstückig an dessen erstem Längsrand (3) angeschlossen ist und der sich in zu der Längsrichtung (L) senkrechten Querschnitten quer, insbesondere senkrecht, zu dem Längssteg (2) erstreckt, wobei der erste Längsschenkel (4) eine Wandung (5) und insbesondere Durchgangsöffnungen (6) aufweist, und wobei der Abstandhalter (1) einen zweiten Längsschenkel (4') umfasst, der an den Längssteg (2) einstückig an dessen zweitem Längsrand (3') angeschlossen ist und der sich in zu der Längsrichtung (L) senkrechten Querschnitten quer, insbesondere senkrecht, zu dem Längssteg (2) erstreckt, wobei der zweite Längsschenkel (4') eine Wandung (5') und insbesondere Durchgangsöffnungen (6') aufweist, wobei die Wandung (5) des ersten Längsschenkels (4) und die Wandung (5') des zweiten Längsschenkels (4') mittels ihres jeweiligen von dem Längssteg (2) abgewandten Längsrandes (7, 7') oder Abschnitten davon gemeinsam eine zu der Längsrichtung (L) und der Querrichtung (Q) parallele Aufstellebene (A) des Abstandhalters (1) aufspannen, zu der sich eine Höhenrichtung (H) des Abstandhalters (1) senkrecht erstreckt, **dadurch gekennzeichnet, dass** der Verlauf (11) der Wandung (5) des ersten Längsschenkels (4) entweder in zumindest einem auf die Höhenrichtung (H) bezogenen, insbesondere an die Aufstellebene (A) angrenzenden, Höhenteilintervall der Wandung (5) oder in der gesamten Höhe der Wandung (5) in zu der Längsrichtung (L) und der Querrichtung (Q) parallelen Querschnitten wellenartig ist und dass der Verlauf (11') der Wandung (5') des zweiten Längsschenkels (4') entweder in zumindest einem auf die Höhenrichtung (H) bezogenen, insbesondere an die Aufstellebene (A) angrenzenden, Höhenteilintervall der Wandung (5') oder in der gesamten Höhe der Wandung (5') in zu der Längsrichtung (L) und der Querrichtung (Q) parallelen Querschnitten wellenartig ist.

2. Abstandhalter (1) nach Anspruch 1, **dadurch gekennzeichnet, dass** der Abstandhalter aus Kunststoff, insbesondere aus PVC und/oder PS und/oder PE wie bspw. HDPE oder LDPE, oder dergleichen, insbesondere mittels eines Extrusionsverfahrens, hergestellt ist.

3. Abstandhalter (1) nach einem oder mehreren der vorangehenden Ansprüche, **dadurch gekennzeichnet, dass** der Verlauf (11) der Wandung (5) des ersten Längsschenkels (4) zumindest in einem an den Längssteg (2) angrenzenden Höhenteilintervall (h) der Wandung (5) in jedem zu der Längsrichtung und der Querrichtung parallelen Querschnitt wellenartig ist und dass der Verlauf (11') der Wandung (5') des zweiten Längsschenkels (4') in zumindest einem an den Längssteg (2) angrenzenden Höhenteilintervall (h) der Wandung (5') in jedem zu der Längsrichtung (L) und der Querrichtung (Q) parallelen Querschnitt wellenartig ist.

4. Abstandhalter (1) nach einem oder mehreren der vorangehenden Ansprüche, **dadurch gekennzeichnet, dass** in den genannten, zu der Längsrichtung (L) und zu der Querrichtung (Q) parallelen Querschnitten der Verlauf (11) der Wandung (5) des ersten Längsschenkels (4) in allen Wandungsbereichen deckungsgleich ist zu einem ersten gedachten geometrischen Verlauf (8), der in der gesamten Länge des ersten Längsschenkels (4) durchgehend periodisch verläuft, und dass in den genannten, zu der Längsrichtung (L) und zu der Querrichtung (Q) parallelen Querschnitten der Verlauf (11') der Wandung (5') des zweiten Längsschenkels (4') in allen Wandungsbereichen deckungsgleich ist zu einem zweiten gedachten geometrischen Verlauf (8'), der in der gesamten Länge des zweiten Längsschenkels (4') durchgehend periodisch verläuft.

5. Abstandhalter (1) nach einem oder mehreren der vorangehenden Ansprüche, **dadurch gekennzeichnet, dass** der erste geometrische Verlauf (8) und/oder der zweite geometrische Verlauf (8') durchgehend gerundet, insbesondere sinusförmig, oder zick-zack-förmig oder trapezförmig oder rechteckförmig geformt ist.

6. Abstandhalter (1) gemäß einem oder mehreren der vorangehenden Ansprüche, **dadurch gekennzeichnet, dass** in einer Projektionsbetrachtung auf einen der genannten, zu der Längsrichtung (L) und der Querrichtung (Q) parallelen Querschnitte, in dem alle Wandungsbereiche des ersten Längsschenkels (4) zu dem ersten gedachten geometrischen Verlauf (8) und alle Wandungsbereiche des zweiten Längsschenkels (4') zu dem zweiten gedachten geometrischen Verlauf (8') deckungsgleich sind, der erste und der zweite gedachte geometrische Verlauf (8, 8') in ihrer gesamten Länge in Querrichtung (Q) voneinander beabstandet sind und/oder zueinander bezüglich einer zu der Längsrichtung (L) parallelen geometrischen Mittelachse (M) achsensymmetrisch, insbesondere zueinander um eine halbe Periodenlänge in Längsrichtung (L) phasenverschoben, verlaufen.

7. Abstandhalter (1) gemäß einem oder mehreren der vorangehenden Ansprüche, **dadurch gekennzeichnet, dass** jeder Längsschenkel (4, 4') in Längsrichtung (L) voneinander beabstandete und auf der von dem Längssteg (2) abgewandten Seite offene Durchgangsöffnungen (6, 6') aufweist, zwischen denen die Wand (5, 5') des Längsschenkels (4, 4') Stützabschnitte (10, 10') bildet.

8. Abstandhalter (1) gemäß einem oder mehreren der vorangehenden Ansprüche, **dadurch gekennzeichnet, dass** sich die Wandung (5) des ersten Längsschenkels (4) zumindest in einem an den Längssteg (2) angrenzenden Höhenteilintervall (h) in der gesamten Länge des Abstandhalters (1) erstreckt und in dem Höhenteilintervall (h) in jedem zu der Längsrichtung (L) und der Querrichtung (Q) parallelen Querschnitt in ihrem Verlauf durchgängig form- und phasengerecht dem ersten gedachten wellenartigen Verlauf (8) entspricht und dass sich die Wandung (5') des zweiten Längsschenkels (4') zumindest in dem an den Längssteg (2) angrenzenden Höhenteilintervall (h) in der gesamten Länge des Abstandhalters (1) erstreckt und in dem Höhenteilintervall (h) in jedem zu der Längsrichtung (L) und der Querrichtung (Q) parallelen Querschnitt in ihrem Verlauf durchgängig form- und phasengerecht dem zweiten gedachten wellenartigen Verlauf (8') entspricht.

9. Abstandhalter (1) gemäß einem oder mehreren der vorangehenden Ansprüche, **dadurch gekennzeichnet, dass** an jedem Stützabschnitt (10) des ersten Längsschenkels (4) der von dem Längssteg (2) abgewandte, an die Aufstellebene (A) angrenzend verlaufende Randabschnitt (12) hinsichtlich seiner Form und Phasenlage mit dem ersten gedachten periodischen Verlauf (8) übereinstimmt und dass an jedem Stützabschnitt (10') des zweiten Längsschenkels (4') der von dem Längssteg (2) abgewandte, angrenzend an die Aufstellebene (A) verlaufende Randabschnitt (12') hinsichtlich seiner Form und Phasenlage mit dem zweiten gedachten periodischen Verlauf (8') übereinstimmt.

10. Abstandhalter (1) gemäß einem oder mehreren der vorangehenden Ansprüche, **dadurch gekennzeichnet, dass** an jedem Stützabschnitt (10, 10') zumindest der von dem Längssteg (2) abgewandte, parallel zur der Aufstellebene (A) verlaufende Randabschnitt (12, 12') zumindest in einem Längenabschnitt einen bezüglich zumindest eines Punktes (P, P') punktsymmetrischen Verlauf oder einen bezüglich einer geometrischen Achse achsensymmetrischen Verlauf aufweist.

11. Abstandhalter (1) gemäß einem oder mehreren der vorangehenden Ansprüche, **dadurch gekennzeichnet, dass** die Durchgangsöffnungen (6, 6') der Längsschenkel (4, 4') in einer zur Querrichtung (Q) parallelen Projektionsbetrachtung halbkreisförmigen oder rechteckigen Querschnitt aufweisen und/oder dass in der Längsrichtung (L) des Abstandhalters (1) die Länge der Durchgangsöffnungen (6, 6') der zueinander gleich großen Periodenlänge der beiden geometrischen wellenartigen Verläufe (8, 8') entspricht.

12. Abstandhalter (1) gemäß einem oder mehreren der vorangehenden Ansprüche, **dadurch gekennzeichnet, dass** die Wandungen (5, 5') des ersten Längsschenkels (4) und des zweiten Längsschenkels (4') jeweils eine einheitliche und insbesondere eine zueinander einheitliche Wandstärke (w) besitzen.

13. Abstandhalter (1) gemäß einem oder mehreren der vorangehenden Ansprüche, **dadurch gekennzeichnet, dass** die Wandung (13) des Längsstegs (2) durchgehend eben verläuft und /oder dass in dem Längssteg Durchgangsöffnungen (14) ausgebildet sind, die insbesondere die Kontur eines Rechteckes, insbesondere mit gerundeten Ecken, aufweisen.

14. Verfahren zur Herstellung von sich in einer Längsrichtung (L) erstreckenden, in zur Längsrichtung (L) senkrechten Profilquerschnitten mehreckigen Kunststoffhohlprofilen, insbesondere von Abstandhaltern (1), aus Kunststoff, umfassend zumindest die Verfahrensschritte:
- Bereitstellen von plastifiziertem Kunststoff, insbesondere mittels Schmelzen von Kunststoffgranulat und/oder Kunststoffpulver oder dergleichen,
- Erzeugen eines verformbaren Kunststoffhohlprofils (18) aus dem plastifizierten Kunststoff, das im Profilquerschnitt einen am Umfang mehreckigen, entweder geschlossenen oder offenen Rand, insbesondere einen geschlossenen, viereckig verlaufenden Rand, besitzt, mittels Pressen des plastifizierten Kunststoffes durch eine Extrusionsdüse (17), **dadurch gekennzeichnet, dass** eine oder mehrere, insbesondere zwei einander im Profilquerschnitt gegenüberliegende, Wandungen (19,19') des verformbaren Kunststoffhohlprofils (18) verformt werden, so dass sie jeweils in ihrem teilweisen oder ganzen, im Profilquerschnitt auf ihre Haupterstreckungsrichtung (R) bezogenen Erstreckungsbereich (B) in zu der Haupterstreckungsrichtung (R) senkrechten Querschnitten einen wellenartigen Verlauf (29, 29') besitzen, wobei insbesondere vorgesehen ist, dass jede der verformten Wandungen (19,19') in zu der Längsrichtung (L) senkrechten Profilquerschnitten einen geraden Verlauf besitzt.

15. Verfahren nach Anspruch 14, **dadurch gekennzeichnet, dass** der jeweilige wellenartige Verlauf (29, 29') der Wandungen (19,19') mittels Formbacken (20, 20') eines Korrugators (25) erzeugt wird.

16. Verfahren nach einem oder mehreren der Ansprüche 14-15, **dadurch gekennzeichnet, dass** der jeweilige wellenartige Verlauf (29, 29') durchgehend gerundet, insbesondere sinusförmig, oder zick-zack-förmig oder trapezförmig oder rechteckförmig oder dergleichen verläuft.

17. Verfahren nach einem oder mehreren der Ansprüche 14-16, **dadurch gekennzeichnet, dass** die Wandungen (19,19') zur Erzielung des wellenartigen Verlaufs von Formbacken (20, 20') des Korrugators (25) mittels Unterdruck angesaugt werden und/ oder von dem hohlen Profilinneren des Kunststoffhohlprofils (18) her mittels Überdruck gegen Formbacken (20, 20') gepresst werden und/oder dass zur Fixierung des jeweiligen wellenartigen Verlaufs (29, 29') die Wandungen (19,19') mittels der Formbacken (20, 20') gekühlt werden.

18. Verfahren nach einem oder mehreren der Ansprüche 14-17, **dadurch gekennzeichnet, dass** es sich bei dem Kunststoffhohlprofil (18) um ein solches handelt, das im Profilquerschnitt einen am Umfang geschlossenen Rand besitzt, und dass das Verfahren, insbesondere nach dem Fixieren des wellenartigen Verlaufs (29, 29') oder der wellenartigen Verläufe (19, 19'), den Schritt umfasst, dass das Kunststoffhohlprofil (18), insbesondere mittels zumindest eines Laserstrahls, in Längsrichtung (L) in zwei Kunststoffteilprofile (26, 27) zerteilt wird, von denen zumindest ein Kunststoffteilprofil (26, 27), insbesondere beide Kunststoffteilprofile (26, 27), einen U-profilartigen Profilquerschnitt besitzt oder besitzen.

19. Verfahren nach einem oder mehreren der Ansprüche 14-18, **dadurch gekennzeichnet, dass** in eine oder in mehrere Wandungen (19, 19', 30, 31) des Kunststoffhohlprofils (18) oder zumindest eines der Kunststoffteilprofile (27, 28) mittels einer oder mehrerer Lasereinrichtungen (32, 34) Durchgangsöffnungen (33, 35) eingebracht werden.

20. Verfahren nach einem oder mehreren der Ansprüche 14-19, **dadurch gekennzeichnet, dass** das Kunststoffhohlprofil (18) oder dass das oder die Kunststoffteilprofile (27, 28) mittels einer oder mehrerer Lasereinrichtungen (37) zur Erzeugung von Längenabschnitten (38) quer zur Längsrichtung (L) durchtrennt wird oder werden.

21. Verfahren zur Herstellung von sich in einer Längsrichtung (L) erstreckenden, in zur Längsrichtung (L) senkrechten Profilquerschnitten mehreckigen Kunststoffhohlprofilen, insbesondere von Abstandhaltern (1), aus Kunststoff, umfassend zumindest die Verfahrensschritte:
- Bereitstellen von plastifiziertem Kunststoff, insbesondere mittels Schmelzen von Kunststoffgranulat und/oder Kunststoffpulver oder dergleichen,
- Erzeugen eines verformbaren Kunststoffhohlprofils (18) aus dem plastifizierten Kunststoff, das im Profilquerschnitt einen am Umfang mehreckigen, entweder geschlossenen oder offenen Rand, insbesondere einen viereckigen Profilquerschnitt, besitzt, mittels Pressen des plastifizierten Kunststoffes durch eine Extrusionsdüse, **dadurch gekennzeichnet,**
- **dass** das Kunststoffhohlprofil (18) mittels einer oder mehrerer Lasereinrichtungen (26) in Längsrichtung (L) des Kunststoffhohlprofils (18) in zumindest zwei Kunststoffteilprofile (27, 28) zerteilt wird, von denen zumindest ein Kunststoffteilprofil (27, 28), insbesondere zwei Kunststoffteilprofile (27, 28), als Profilquerschnitt einen Hohlquerschnitt mit am Umfang offenen Rand besitzen, und/oder
- **dass** mittels einer oder mehrerer Lasereinrichtungen (32, 34) Durchgangsöffnungen (33, 35) in eine oder mehrere Wandungen (19, 19', 30, 31) des Kunststoffhohlprofils (18) und/oder in Wandungen (19, 19', 30, 31) von einem oder mehreren Kunststoffteilprofilen (27, 28), eingebracht werden.

22. Verfahren nach einem oder mehreren der Ansprüche 14-21, **dadurch gekennzeichnet, dass** die beiden Kunststoffteilprofile (27, 28) bezogen auf den Profilquerschnitt quer zu ihrer Schnittebene (39) zueinander gleiche oder unterschiedliche Erstreckungen (40, 41) aufweisen.

23. Abstandhalter (1), umfassend ein nach einem oder mehreren der Ansprüche 14-22 hergestelltes Kunststoffhohlprofil (18) oder Kunststoffteilprofil (27, 28), wobei es sich insbesondere um einen Abstandhalter (1) nach einem oder mehreren der vorangehenden Ansprüche 1 bis 13 handelt.
